# EUROPEAN PATENT SPECIFICATION

(11) **EP 2 356 173 B1**
(45) Date of publication and mention of the grant of the patent: **13.06.2018**
(21) Application number: 09756438.9
(22) Date of filing: 18.11.2009
(51) Int. Cl.: C08J 9/20, C08J 9/232, C08J 9/18, C08F 2/18

(54) **PROCESS FOR THE PREPARATION OF AN EXPANDABLE POLYMER COMPOSITION IN THE FORM OF BEADS**
VERFAHREN ZUR HERSTELLUNG EINER SCHÄUMBAREN POLYMERZUSAMMENSETZUNG IN DER FORM VON KÜGELCHEN
PROCÉDÉ POUR LA PRÉPARATION D'UNE COMPOSITION DE POLYMÈRE EXTENSIBLE EN FORME DE BILLES

(30) Priority: 12.12.2008 EP 08021632
(43) Date of publication of application: 17.08.2011
(73) Proprietor: Jackon GmbH, 23970 Wismar (DE)
(72) Inventor: TOGERSEN, Svein, 23968 Gàgelow (DE); TOGERSEN, Rune , c/o Jackon AS, NO-1602 Frederikstad (NO); WITT, Nico, 19057 Schwerin (DE); FRAHM, Eckerhard, 18196 Kessin (DE); FAGERBAKK, Anine, NO-0958 Oslo (NO); NYHUS, Anne Kari, 1481 Hagan (NO)
(74) Representative: Kaewert, Klaus
(86) International application number: PCT/EP2009/008208
(87) International publication number: WO 2010/066331

(56) References cited:
- EP-A- 0 000 572
- EP-A- 1 995 273
- WO-A-2005/123816
- DE-A1- 10 150 405
- DE-A1- 19 742 910
- JP-A- 2007 211 230
- JP-A- 2008 239 709
- US-A- 6 034 143
- US-A1- 2003 109 657

## Description

The present invention relates to a process for the preparation of an expandable polymer composition in the form of beads and an expandable polymer composition in the form of beads obtainable by such process. Furthermore, the present invention relates to a pre-expansion process, a pre-expanded polymer composition obtainable by such pre-expansion process and an expanded moulded object.

An expandable polymer composition in the form of beads comprises a blowing agent which enables the expansion of said composition at a later stage. Expandable polymer compositions are generally produced either by an extrusion process wherein a blowing agent is incorporated into a bulk polymer which is extruded and subsequently under water pelletized, or by suspension polymerisation arriving at spherical beads, wherein the blowing agent is incorporated into the polymer composition. From such an expandable polymer composition, moulded objects are generally obtained in three steps, typically 1.) a so-called "pre-expansion" (or "pre-foaming") step, 2.) a "maturation" (also called "stabilisation") step and 3.) a "moulding" (also called "sintering" or "fusion") step.

Moulded objects obtained from expandable polymer compositions are used in different fields of applications such as housing insulations or packaging. Depending on the field of application, different properties are required for the moulded object. The properties of a moulded object may be tailored by incorporating one ore more suitable additive(s) into the expandable polymer composition from which the moulded object is manufactured. However, problems have to be encountered in suspension polymerisation for incorporation of such additives within the production process of expandable polymer compositions and moulded objects thereof respectively. Therefore, there is a need for a stable suspension polymerisation production process for expandable polymer compositions comprising additives.

WO 2004/087798 A1 describes suspension polymerisation of vinylaromatic monomers as well as extrusion of vinylaromatic polymer wherein carbon black is incorporated into the polymer composition during the process.

The EP 1436348 A3 describes EPS beads comprising graphite, which are obtained by a suspension polymerisation process carried out in the presence of at least two peroxides, wherein one peroxide has a specially defined half-life.
In the methods of EP 1 159 338 A1, athermanous material, in particular aluminum particles, are incorporated in polystyrene and/or derivatives thereof by extrusion. Document DE 198 28 250 A1 describes a process for the production of EPS beads comprising graphite. These EPS beads are obtained either by mixing graphite particles into a polystyrene melt or preferably by suspension polymerisation of styrene in aqueous suspension in the presence of graphite particles.
The WO 2007/114529 A1 describes a suspension polymerisation process for manufacturing EPS beads comprising graphite.

JP 2007-211230 A discloses a recycling process for collected polystyrene resins containing an acrylonitrile styrene copolymer wherein resin pellets formed from recovery (i.e. already expanded) polystyrene resins containing an acrylonitrile styrene copolymer are used as seed material for a subsequent seed polymerisation. The resin pellets are obtained by extrusion, in which coarse-grinded particles of the recovery polystyrene are covered with ethylene-bis-stearylamide and talc as lubricant additives before processing.

In JP 2008-239709 A, addition of a fire retardant to expandable polystyrene (EPS) particles is disclosed. The fire retardant is added to the EPS particles during seed polymerisation by adding a solution of fire retardant dissolved in plasticizer to an aqueous seed suspension.

Document EP 0 000 572 A relates to a process for preparing spherical, expandable styrene polymerisates, wherein styrene polymerisates already containing blowing agent are impregnated with styrene monomer, and then polymerisation is carried out. The main purpose is to make use of styrene polymerisates derived from oversized/undersized (side) fractions of a previous EPS production. The styrene polymerisates may contain additives.

DE 101 50 405 A1 discloses a suspension polymerisation process, in which graphite particles are incorporated into EPS particles. The suspension polymerisation is carried out by solving/dissolving polystyrene, preferably obtained from side fractions of a previous EPS production, in styrene monomer, and the resulting organic solution/phase, initiator and graphite are subsequently suspended in water and then subjected to suspension polymerisation.

In US 6,034,143 an additive may be incorporated into EPS particles by adding the additive during seed polymerisation.

WO 2005/123816 A1 discloses EPS particles containing graphite as athermaneous material, wherein said EPS particles are produced either by aqueous suspension polymerisation of styrene monomers wherein graphite particles are present during the suspension polymerisation, or by extrusion and under water pelletizing, respectively in the presence ofnon-ionic tenside.

In the above indicated prior art, suspension polymerisation, seed polymerisation or extrusion processes are applied for incorporating additives into expandable polymer compositions, inparticular EPS. However, these processes have certain procedural drawbacks which may alsoseriously affect relevant physical properties of moulded objects obtained from expandable polymer compositions produced by these prior art processes. Similar abservations apply when various types of additives are contemplated.

JP200721 1230 discloses a process for the preparation of an expandable polymer composition in the form of beads, wherein the process comprises the steps of
- providing seed material comprising a polymeric base material and additives incorporated by compounding
- performing seed polymerisation with said seed material in one or more consecutive Seed polymerisation steps

But this document refers to the recycling of used styrene material. Recycled plastic is dirty and always a mixture of different materials. Although the document tells that is possible to overcome all problems. In reality polymerisation is too sensible for recycled material. Therefore, the object of the present invention is to provide an improved process for the preparation of an expandable polymer composition and to provide an improved expandable polymer composition.

### Summary of the invention

The object is solved by a process for the preparation of an expandable polymer composition in the form of beads and by an expandable polymer composition in the form of beads as defined in the appended claims. The present invention further provides an pre-expansion process and an expanded moulded object, also as defined in the appended claims.

According to the present invention, it has been surprisingly found that the point in time and status of incorporating one or more additive(s) is significant for obtaining expandable polymer compositions by a stable and safe seed polymerisation process.

Specifically, it turned out to be critical to establish a seed polymerisation system and to observe the manner how the seed material is constituted and made, an alternatively to mutually enhance beneficial effects - in combination therewith to observe proper seed treatments where the seed material already has the additive(s) incorporated.

As a result, the present process provides for excellent operability which limits the risk of suspension instability, product quality limitations or safety problems due to operating errors, while still providing expandable polymer compositions having excellent physical and chemical properties. In particular, the expandable polymer composition of the present invention provides unique combination of features to balance counter-acting effects, by enabling to load a high amount of additive(s), while ensuring a beneficial effect on possible distributions and on advantageous cohesion between said additive(s) and the polymer matrix. Thus, the present expandable polymer composition provides for excellent processability in subsequent pre-expansion and moulding steps. Accordingly, moulded objects obtained from these expandable polymer compositions exhibit excellent physical and chemical properties especially tailored for their field of application, all in combination with economical and ecological benefits.

Various aspects, advantageous features and preferred embodiments of the present invention as summarized in the following items, respectively alone or in combination, contribute to solving the object of the invention:
(1) A process for the preparation of an expandable polymer-composition in the form of beads, wherein the process comprises the steps of:
   i) providing seed material comprising a polymeric base material and one or more additive(s) incorporated by compounding, wherein additive(s) are incorporated into the seed material by a process providing for an even distribution of the one or more additive(s) in the seed material by effectively mixing a polymer melt with said one or more additive(s),
   ii) performing seed polymerisation with said seed material in one or more consecutive seed polymerisation steps.

The term "polymer composition" used herein means that the prepared composition may comprise a homo- or copolymer. The polymer composition contains (de novo synthesized, i.e. yet unexpanded and yet unexpandable) styrene polymers or copolymers.
The term "additive" as used herein means different kinds of inorganic and organic additives, for example selected from the group consisting of athermanous material, flame retardant, nucleating agent, plasticizer, pigment, dye and functional additives for purposes other than reacting in the polymerisation reaction. Additives may be added to the seed material, and/or they may be added during the seed polymerisation, which provides for an advantageous improvement of the physical characteristics of the expandable polymer composition.
The term "expandable" used herein means that the polymer composition has expansion characteristics, for example by comprising a blowing agent for expansion of the composition at a later stage.
The term "seed material" as used herein means a polymer composition in the form of particles, wherein these particles have a smaller particle size than the beads of an expandable polymer composition finally obtained by the process according to the invention. The pre-polymerized seed material has the advantage of providing a predefined shape and size, and freedom of obtaining it.
The term "incorporated by compounding" means that the additive(s) are incorporated into the seed material by a process which provides for an even distribution of the one or more additive(s) in the seed material by effectively mixing a polymer melt with one or more additive(s).
Seed polymerisation is carried out using the seed material in the presence of monomer for further polymerisation to obtain the expandable polymer-composition. Suitable monomers are further described below (see e.g. item(41) etc.).
According to these definitions, the seed material is constituted as a bulk material prepared by incorporating additive as an appropriate seed for the subsequent seed polymerisation process.

The procedural concept according to this aspect of the invention involving seed material formation and then performing seed polymerisation provides for a stable and safe operability of the process. This advantageous operability is accomplished by the seed polymerisation of step ii) following provision of appropriate seed material of step i), whereupon the seed material is grown with monomer(s) and optionally polymerisation initiator(s) or additive(s) until the final, desired bead size of the expandable polymerisation composition is obtained. Thus, as the seed material of step i) already comprises all, the majority (>50wt%) or most (>75wt%) of the additive(s), there will be no suspension stability problems during the seed polymerisation of step ii). Furthermore, since the seed material already contains pre-polymerized polymer, and since the monomer content during polymerisation is preferably continuously kept maximally at 40% by weight, more preferably maximally at 30% by weight and in particular maximally at 20% by weight relative to the amount of polymer, the subsequent suspension polymerisation reaction will be less exothermic compared to conventional suspension polymerisation starting from monomers without seed material. Inter alia, this provides for a better control of the polymer design and the molecular weight distribution. Furthermore, the tendency towards coagulation within a suspension is much lower in a less exothermic polymerisation reaction, which in turn provides for an enhanced control of the distribution of additive within the final expandable polymer composition.
(2) A process for the preparation of an expandable polymer composition in the form of beads, comprising the steps of:
   a) making an aqueous suspension comprising at least seed material comprising a polymeric base material and one or more additive(s), polymerisation initiator(s), suspension stabilizer(s) and water, wherein the one or more additive(s) is (are) evenly distributed in the seed material,
   b) subjecting the seed material to a first seed polymerisation with at least one or more kinds of monomer(s) and optionally with one or more kinds of polymerisation initiator(s), wherein said first seed polymerisation is effected at a temperature allowing polymerisation to proceed at a first, relatively slow polymerisation rate,
   c) increasing the temperature to a polymerisation temperature allowing a second seed polymerisation to proceed at a second polymerisation rate higher than the first polymerisation rate, and
   d) optionally performing a third or further seed polymerisation.

In a preferred embodiment of this aspect of the invention, the seed material of step a) is provided in accordance with and as described in item (1) above.

The term "polymerisation rate" as used herein means the reaction rate of the polymerisation reaction.

Furthermore, the term "seed polymerisation" as used herein means a polymerisation allowing the seed materials to grow in diameter by addition of monomer(s). As to the description of suitable monomers, reference can be made again to further description below (see e.g. item (41) etc.).

The substantial slow polymerisation during the first seed polymerisation within step b) is effected at a temperature or temperature range below a decomposition temperature of the polymerisation initiator(s) at which polymerisation takes place at an effective rate, but sufficient to induce first decomposition of polymerisation initiator(s) providing for a substantially slow first polymerisation rate. Thereby, monomer(s) and polymerisation initiator(s) diffuses into the seed, which surprisingly contributes to an enhanced advance homogeneous distribution of additive(s) in the seed polymer prior to the proper and substantive seed polymerisation in step c) proceeds. The homogeneous distribution of additive(s) in the seed represent the pre-requesite for an even cell structure in the foam, and to achieve targeted product performances.

Owing the conditions of step a) to d), the polymerisation reaction can be advantageously controlled. The first phase of seed polymerisation is defined by a substantially slow first polymerisation rate. Polymerisation can be made less exothermic owing to a polymerisation taking place at slow rate during the first seed polymerisation of step b), and the content of monomer relative to the seed material can be suitable adjusted. Therefore, the system is less prone to problems of cooling capacity and compatibility of additive with other components and less prone to additive agglomeration, and thus, a reliable, robust and efficient process is provided.
(3) The process according to item (1) or (2), wherein the polymeric base material is a blend of two or more compatible polymers.
   In this way, it is possible to suitably set the chemical and physical properties of the final expandable polymer compositions by using an appropriate blend of two or more compatible polymers as the polymeric base material. The term "compatible" as used herein means that the two or more polymers from a homogenous blend in the seed. The compatible polymers may belong to the same kind of polymer, e.g. polystyrene, or to different kinds of polymers, e.g. a polystyrene polymer and an acrylate polymer. Thus, the composition according to the invention ensures improved chemical and physical properties compared to polymer composition obtained by using seed material comprising onlyone polymer as the polymeric base material. Furthermore, the two or more compatible polymers are selected with the proviso that their blend ensures strong physical bonds between the additive(s) and the polymer matrix.
(4) the process according to item (3), wherein the blend of two or more compatible polymers comprises one or more polymer(s) of a first type having a melt flow index of less than 10 g/10 minutes (at a temperature of 200°C and a mass of 5kg) and one or more polymer(s) of a second type having a melt flow index being 10 times higher, more preferably 20 times higher and in particular 30 times higher than of the polymer(s) of the first type.
   According to this beneficial embodiment of the invention, the physical and chemical properties of the composition can be suitably tailored in view of the final moulded product. By suitably selecting one or more polymer(s) of said first type and one or more polymer(s) of said second type with the proviso that their melt flow indices measured according to DIN EN ISO 1133 are within the above defined ranges, the movement of the additive present in the seed material and the expansion properties of the final expandable polymer composition can be significantly improved, in particular, an exceptionally even cell structure is obtained within the final expendable polymer composition. Furthermore, the above subject-matter provides for a significantly reduced release of dusts of particulate additive(s) from the expandable polymer composition, which improves working conditions within a production plant and provides for a substantial decrease of maintenance due to dust affecting the functioning of the production plants.
(5) The process according to any one of items (1) to (4), wherein the amount of seed material is 5 to 50% by weight, preferably 10 to 30 % by weight of the finally obtained expandable polymer composition,
   The term "% by weight of the finally obtained expandable polymer composition" means that the % by weight values given for item (5) refer to the weight of a polymer composition obtained by carrying out the processes according to items (1) to (4), which comprises additives and blowing agent(s).
   Also regarding to this preferred embodiment of the process defined in item (5) above, reference is made to the explanations in items (2) and (3) above.
(6) The process according to any one of items (1) to (5), wherein the polymerisation temperature is in the range beginning at 70 °C, preferably 80 to 120 °C.
   As to this embodiment of the process defined in item (6) above and its significance, reference is made on the explanations in items (2) and (3) above.
(7) The process according to items (1) to (6), wherein a polymerisation step is conducted such that the monomer content, relative to the amount of polymer, is continuously kept maximally at 40 % by weight, preferably maximally at 30 % by weight and more preferably maximally at 20 % by weight.
   Conducting a polymerisation step at the above defined monomer content has the following advantages, which also apply for the above mentioned first seed polymerisation at substantially slow rate besides the second seed polymerisation at higher rate.
   Substantially monodisperse beads are obtained due to the fact that the polymer beads contained in the aqueous suspension will be less sticky at the defined monomer content, and thus the problem of splitting of beads due to shear forces exerted by an agitator is significantly reduced. Furthermore, the measure of controlling the monomer content, relative to the amount of polymer, contributes to an efficient control of the distribution of the additive within the obtained bead. Surprisingly, by controlling the monomer content within the reaction suspension, diffusion of monomer(s) and initiator(s) into the seed and growing seed respectively is assured. Both mechanism can be controlled in balance, thereby also controlling additive distribution in the obtained bead. Thus, the formation of new polymer beads growing without comprising seed material is effectively suppressed. Furthermore, the formation of polymer in the border region and/or on the surface of the seed, either with or without additive(s) or with inhomogenously distributed additive(s), can be effectively controlled. Thereby, a polymer composition in the form of beads is obtained wherein the additive is either homogenously distributed, or irregularly distributed with desired volume ratios.
(8) the process according to any one of items (1) to (7), wherein at least one blowing agent is provided (notably added) not before but during or after seed polymerisation.
   A "blowing agent" is a substance which enables the expansion of the polymer composition in the form of beads by increasing the internal pressure within the beads. For example, an organic compound evaporating under pre-expansion conditions may act as blowing agent. By this measure, presence of blowing agent in the seed before starting seed polymerisation is advantageously avoided, as the presence of blowing agent in the seed may affect the whole process and in particular the seed polymerisation process.
   Moreover, this measure and characteristic of the preferred embodiment of the invention is indicative of a distinct difference from cases where blowing agent is present in original polystyrene (co-)polymers, e.g. when conventionally applying unused oversize/undersize fractions f a previous production batch of expandable polystyrene (co-)polymers which, however, is associated with minor quality and leads to inappropriate molecular weight distribution. Further, this preferred feature is indicative of a distinct difference from cases where already pre-expanded or expanded (foamed) polymer is used as a starting material. Rather, the polymer of the seed material according to the present invention is ost effective constituted by *de novo* synthesized polymers. This is because unless well defined, *de novo* synthesized polymers for the seed material (i) free of blowing agent and/or (ii) free of already pre-expanded or expanded polymers are used according to the present invention, there is a strong tendency to uneven distribution of additive in the seed material and consequently to uncontrolled and inferior product quality, while the properties of the final expandable polymer composition cannot be appropriated tailored as according to the present invention.
(9) The process according to any one of items (1) to(8), wherein the seed material is obtained by extrusion and, preferably combined with under-water pelletizing.
   The term "extrusion" as used herein means that a polymer or blend of polymers is mixed with one or more additive(s) to be incorporated into the polymer or blend of polymers. The mixture may be pushed through one or more heaters, optionally through one or more mixers, and through a die. The extruder should be equipped an operated with suitable means for a thorough and efficient mixing, such as with the assistance of extruder screws and operation at elevated temperature sufficient for efficient polymer melting and mixing. When the die has the shape of one or more circular opening(s), oval shaped or off-round beads are obtained after subsequent under-water pelletizing. The Term "under-water pelletized" as used herein means that a bulk of molten polymer(s) or polymer blend(s) is subsequently pelletized after extrusion by suitable cutting means in order to form beads before in-situ cooling in water to form the solid and final bead shape.
   This embodiment of the invention provides for a particularly effective incorporation of one or more additive(s) by compounding, whereby an even distribution into the seed material is achieved. Furthermore, high amounts of additive(s) can be incorporated as desired.
(10) The process according to any one of items (1) to (9), wherein said one or more additive(s) is/are selected from the group consisting of inorganic or organic substance(s) and/or composite materials comprising inorganic and/or organic substance(s).
(11) The process according to item (10), wherein said one or more additive(s) is/are selected from one or more athermanous materials.
(12) The process according to item (10), wherein said one or more additive(s) is/are selected from one or more flame retardant(s).
(13) The process according to item (10), wherein said one or more additive(s) is/are selected from one or more thermoplastic elastomer(s).
(14) The process according to item (10), wherein said one or more additive(s) is/are selected from one or more compatible polymer(s).
(15) The process according to item (10), wherein said one or more additive(s) is/are selected from one or more nucleating agent(s).
(16) The process according to item (1i,2-15), wherein said one or more additive(s) is/are selected from one or more pigment(s) or dye(s).
(17) The process according to item (1i,2-16), wherein said one or more additive(s) is/are selected from one or more filler(s).
(18) The process according to item (10), wherein said one or more additive(s) is/are selected from one or more special effect additive(s).
   According to these beneficial embodiments of the invention defined in items (10) to (18), The physical and chemical properties of the composition can be suitably tailored in view of the final moulded product.
(19) The process according to any one of items (1) to (18), wherein the additive is an athermanous material, namely graphite.
   These athermanous materials represent effective infrared wave absorbers which are also advantageous from the economical point of view, wherein graphite is preferred due to its outstanding ability to absorb infrared waves. The present invention is particularly well suited for achieving beneficial properties when using such particulate athermanous material and especially graphite as the additive. Further, the preferred embodiment of item (19) can be beneficially combined with using flame retardant as another additive at the same time.
(20) The process according to any one of items (1) to (19), wherein two or more differentpolymerisation initiators are used, wherein the two or more different polymerisation initiators are used, wherein the two or more different polymerisation initiators have different activation temperatures.
   According to this embodiment of the invention, an advantageous control of the heat energy released by the polymerisation reaction is provided. One polymerisation initiator having a quite low activation temperature will initiate a first seed polymerisation effected at a temperature allowing polymerisation to proceed at substantially slow polymerisation rate, and also initiating a second seed polymerisation at a second polymerisation rate higher than the first polymerisation rate as low temperature, and the second or further polymerisation initiator(s) having a quite high activation temperature will initiate a second seed polymerisation at higher temperature(s). This approach enables a stepped increase of the polymerisation temperature, thus the viscosity of the polymerisation mixture can be decreased. Furthermore, the following drawbacks caused by the so called gel- or Trommsdorff-effect can be controlled: significant decrease of polymerisation rate at a certain rate of conversion, significant increase of the polymerisation rate at a higher conversion rate and a broad molecular weight distribution associated therewith.
(21) The process according to any one of item (1) to (20), wherein one or more different polymerisation initiators are used, wherein a first polymerisation initiator has an activation temperature in a range of 75°C to 100°C, preferably 80 to 95°C, and more preferably 85°C to 90 °C, and wherein an optional second polymerisation initiator has an activation temperature in a range of 95°C to 120°C, preferably 100 to 115°C, and more preferably 105°C to 110°C, and an optional third polymerisation initiator has an activation temperature in a range of 105°C to 135°C, preferably 110 to 130°C, and more preferably 115°C to 125°C. Regarding to this preferred embodiment, reference is made to the explanations in item (21) above. The predefined activation temperatures enhances reliability, robustness and efficiency of the polymerisation reaction.
(22) The process according to any one of items (1) to (21), wherein the seed material comprises said additive in up to 40% by weight, preferably 1% to 30% by weight, more preferably 5% to 25% by weight and in particular 10% to 20% by weight based on the total weight of the seed material.
   According to this beneficial embodiment of the invention, the content of additive comprised in the seed material is set within a range which provides for an advantageous amount of additive within the final expandable polymer composition.
(23) The process according to any one of items (1) to (22), wherein the seed material has a maximum particle size in a range of 400 to 1500 µm, preferably 500 to 1400 µm, more preferably 600 to 1300 µm and a coefficient of variation of less than 15%, preferably between 9 and 13%, more preferably between 8 and 10%.
   The term "maximum particle size" used herein means a peak particle size for detectable particles, observed in the particle size distribution determined by using a particle size determination apparatus.
   The seeds are substantially monodisperse,that is for a plurality of seeds (e.g. at least 100, preferably at least 1000 of arbitrary selected seed particles), the seed have a coefficient of variation of less than 15%, wherein the term "coefficient of variation" is defined as standard deviation multiplied by 100, divided by the mean particle size of the beads.
   If the seed is spherical, preferably substantially monodisperse, then the diameter of the spherical shape represents the particle size. If the seed is a pellet, that is an oval or cylindrically shaped particle having a round or oval cross section with a defined diameter and a defined length, then the length of pellet represents the particle size of the seed material is predertermined and provides for the growth of substantially monodisperse beads of expandable polymer composition.
   In this way, a seed material is provided which has an advantageous particle size in order to incorporate desirable, optionally high amounts of additive into the seed material, while additionally having a suitable substantial monodispersity which provides for an appropriate starting material for growing substantially monodisperse expandable polymer compositions.
(24) The process according to any one of items (1) to (23), wherein the maximum particle size of said seed is increased in the seed polymerisation at least by the factor 2 to 10, preferably by the factor 3 to 9 and more preferably by the factor 4 to 8.
   According to this beneficial embodiment of the invention, a growth of the seed material by the above defined factors provides for an expandable polymer composition in the form of beads which is substantially monodisperse.
(25) The process according to any one of items (1) to (24), wherein the content of the blowing agent within the expandable polymer-composition in the form of beads is ≤ 7 percent by weight relative to the total composition.
   This measure provides for an efficient expandability of the expandable polymer composition at a later stage of pre-expansion and/or moulding, yet with ensuring stability and density control of the expandable polymer composition.
   The term "maximum particle size" used herein means the peak particle size for detectable particles, observed in the particle size distribution determined by using a particle size determination apparatus.
   In this way, it is possible to directly yield substantially monodisperse expandable beads. Therefore, the necessity of one or more grading step(s) in order to separate particles/beads having different sizes is less likely. Furthermore, the overall yield of the process according to the invention is higher compared to conventional suspension polymerisation, because there is limited "off-specification" material, i.e. material having bead/particle size below or above the bead/particle sizes typically used in industry.
(26) The process according to any one of items (1) to (25), wherein the residual monomer content of the final expandable product is reduced to less than 1.000 ppm by conducting a final polymerisation after the seeds have grown to a targeted bead size by
   seedpolymerisation, in order to reduce the amount of non-polymerized monomer within the bead. More preferably, the period of this final polymerisation overlaps or coincides with the period of blowing agent impregnation.
(27) Process for the preparation of an expandable polymer-composition in the form of beads, preferably when carrying out a process according to any one of items (1) to (26), which process is performed under any on, or a combination of the following process conditions, such that a distribution of the additive(s) within the final polymer composition of the beads is controlled:
   (aa) adding monomer step-wise or gradually, and paying attention to limited monomer content during seed polymerisation(s) (in particular as specified in item (7)),
   (bb) use of de novo synthesized polymer such as styrene polymers or copolymers, absent of blowing agent, in the seed material (in particular as specified in item (8)),
   (cc) melt flow index of the polymer(s) used for the seed material, especially when it is adjusted by selecting a polymer material in the seed to respectively adopt a relatively high or low MFI value, and/or when observing the presence of a blend of two or more compatible polymers having different melt flow indices, respectively (in particular as specified in items (3) and (4)),
   (dd) polymerisation rate during seed polymerisation, in particular both the first and second polymerisation rate, relative to polymerisation temperature and activation temperature(s) of optionally different polymerisation initiators (in particular as specified in items (21) and (22)), and
   (ee) type of additive (in particular as specified in items (10) to(20)).

According to this preferred embodiment, the additive(s) has (have) a tailored distribution within the final polymer composition of the expandable beads, depending especially on the critical conditions listed above. The following structures can be advantageously realized:
Either, the additive is homogenously distributed within the final polymer composition. During the seed polymerisation process, the additive can be homogenously "diluted" within the growing polymer matrix. Optionally, obtaining homogeneous distribution may be assisted, if desired, by further adding a corresponding additive into the step of seed polymerisation, besides the addition to the seed material.
Or, alternatively and more preferred, it is possible to provide an irregular distribution of the additive(s) within the obtained beads, which is defined by a relatively high volume ratio in a core of the respective beads and, compared to the core, a relatively low volume ratio located in a more outer region and especially in a border region of the respective beads. This preferredembodiment is described in further detail below, also in items (33) and (34). In either way, it is possible to provide for an advantageous cohesion between the additive substance within the polymer matrix.

The following correlations exist between the critical factors of the seed polymerisation process and the alternative tailored additive distribution:
In particular, conditions (aa), (bb) and (cc) mentioned above respectively alone, in particular in combination allows to effectively control and eventually favour an irregular distribution. Further, the use of particulate additive tends to the formation of an irregular distribution, especially when used in combination with conditions (aa), (bb) and (cc), whereas non-particulate additive(s) contribute to and may provide a homogeneous distribution. In case of a combination of additives, it is also possible to have a particulate additive being irregularly distributed while having the concurrent non-particulate additive being homogenously distributed throughout the obtained beads.

Hence it is advantageously possible according to the present invention to tailor the distribution dependent from the type of additive and depending on the purpose of the expandable polymer composition.
(28) Expandable polymer composition in the form of beads comprising an additive, wherein the polymer composition has one or more additive(s) distributed in the beads and is obtained by incorporation of said one or more additive(s) into the seed material and subjecting the seed material to a seed polymerisation process, wherein said seed material contained a blend of two or more compatible polymers having different melt flow indices, respectively.
(29) The expandable polymer composition according to item (28), wherein said blend comprises one or more polymer(s) of a first type having a melt flow index of less than 10 g/10 minutes (at a temperature of 200°C and a mass of 5 kg) and one or more polymer(s) of a second type having a melt flow index being 10 times higher, more preferably 20 times higher and in particular 30 times higher than that of the polymer(s) of the first type.
(30) The expandable polymer composition according to item (28) or (29), defined by features as described under any one of items (1), (2) and (5) to (29) above.
(31) Expandable polymer composition in the form of beads comprising an additive, wherein the polymer composition has an additive distributed in the beads by being incorporated into seed material and by subjecting the seed material to a seed polymerisation process, wherein the distribution of the additive with the obtained beads is irregular by being defined by a first relatively high volume ratio in a core of respective beads and, compared to the core, a second relatively low volume ratio in a border region of said respective beads.

The term "core§ used herein means the centre of the bead and some region around the centre, and covers at least the region derived from the seed material but optionally extends towards to outer surface exempting a border region. The term "border region" used herein means a region with the bead located between the core and the outer surface of the bead. In particular, the border region is close to outer surface and may include an outer surface layer and the very outer surface. For example, the border region may cover from 0 to 30%, or from 0 to 20% of the radius length measured from an outer surface to the centre of the bead, respectively with (i.e. including 0%) or without (i.e. excluding 0%) the very outer surface.
A suitable and useful relation between the volume ratio of a border region compared to the core includes embodiments that the relatively low volume ratio in a border region represents about 10& or lower, about 20% or lower, about 50% or lower, or about 80% or lower of additive volume ratio relative to the volume ratio in the core, on the averageof a production batch of expandable polymer beads, when taking the measured volume ratio in the core as 100% as the reference.
(32) The expandable polymer composition according to item (31), defined by features as described under any one of items (1) to (27) above. In particular, the distribution of the additive(s) defined in items (31) can be effectively controlled and tailored as described in item (27).
(33) The expandable polymer composition according to any one of items (28) to (32), wherein the additive is in particulate form.
   In this way, the particulate additive can be graded easily and therefore enable non-agglomerated particles of the additive and thus contribute to stable product quality. Furthermore, in the case when the additive is an athermanous material and especially in case of using graphite, the surface of the athermanous material is quite large, which provides for an effective infrared ray absorption within a moulded object and thus it also provides for a low thermal conductivity value of the moulded object.
(34) The expandable polymer composition according to item (33), wherein the particulate additive is irregularly distributed as defied in item (31).
   This embodiment provides for particularly useful properties, especially since the relatively lower volume ratio thereof in the border region reduces or even completely diminishes generation of dust of the particulate additive released from the beads. In addition, other useful properties of the expandable beads such as fusing performance are less inhibited by the relatively lower volume ratio of fusion-inhibiting effects of some additive(s) in the border region. Nevertheless, this embodiment can be advantageously combined with a relatively more homogenous distribution of another type of additive different from the additive having irregular distribution. A particular example for this is when a particulate additive such as an athermanous particulate material (e.g. graphite) is irregularly distributed in combination with relatively homogenously distributed flame retardant, particularly an essentially or entirely homogenously distributed flame retardant. This can be appropriately accomplished by selecting a flame retardant which is, relative to the particulate additive, better soluble or more miscible within the seed material and therefore in the beads undergoing the polymerisation process.
(35) The expandable polymer composition according to any one of items (28) to (34), wherein the additive(s) has/have an average particulate diameter of 50 nm to 50 µm, preferably 100 nm to 30 µm and more preferably 200 nm to 20 µm.
   According to this embodiment of the invention, suitable particle size of the additive are defined, which provide for an advantageous incorporation into the seed material. Furthermore, additive(s) having a particle size within the nanometer range provide for an advantageous enhancement of the physical of the expandable polymer composition.
(36) The expandable polymer composition according to any one of items (28) to (35), wherein the seed material is obtained by extrusion and, preferably combined with under-water pelletizing.
   As to embodiment of the composition and its significance, reference is made to the explanations in item (9) above.
(37) The expandable polymer composition according to any of items (28) to (36), wherein the beads directly obtained from seed polymerisation are substantially monodisperse defined by a coefficient of variation of less than 15%, preferably 11% and more preferably less than 8%.
   In this way, the composition provides for improved mechanical strength and premium quality appearance of an object moulded with the composition according to the invention.
(38) The expandable polymer composition according to any one of items (28) to (37), wherein the polymer or copolymer comprised in the composition is derived from the group consisting of styrene derivatives.
   Styrene polymers are advantageous from the economical view, as starting materials are well available and relatively inexpensive. The characteristics of the styrene or styrene derivative polymer may be improved by introducing one or more copolymer(s) other than styrene or styrene derivatives, preferably ethylenically unsaturated monomers such as acrylates and/or maleic- and/or fumaric acid or derivatives thereof.
(39) The expandable polymer composition according to any one of items (28) to (38), which further comprises a blowing agent consisting of one compound or a mixture of compounds selected from the group consisting of substituted or unsubstituted aliphatic or cyclic hydrocarbons having 3 to 8 carbons, preferably propane, pentane, cyclopentane, cyclobutane, propylene, butylene, more preferably pentante or butane, and in particular pentane. The blowing agents has been added during or after seed polymerisation.
   The above blowing agents provide for a rapid diffusion into the polymer composition. Furthermore, the blowing agents may be selected in view of environmental aspects. Therefore, non-halogenated hydrocarbons such as pentane or butane are preferred. Preferably, the blowing agent is selected on condition that its boiling point is lower than glass transition temperature T_{g} of the polymer, more preferably its boiling point is in a range of about -50 to +50°C.
(40) The composition according to any one of items (28) to (39), wherein the residual monomer content of the final expandable product is less than 1.000 ppm.
   In this way, the residual monomer content within the final expandable product is set to an acceptable low value. This is achieved by conducting a final polymerisation after the seeds have grown to a targeted bead size by seed polymersation, in order to reduce the amount of non-polymerized monomer within the bead. More preferably, the period of this final polymerisation overlaps or coincides with the period of blowing agent impregnation.
(41) A pre-expansion process, comprising: subjecting the expandable polymer-composition in the form of beads according to any one of items (28) to (40) to a heat treatment.
   The term "pre-expansion" used herein means that the expandable polymer composition according to the invention is heated, e.g. by steam, to above its glass transition temperatureT_{g}. The blowing agent contained in the composition in the form of beads expands, such that the bead volume of pre-expanded beads increases by a factor of about 40 to 80 compared to the original volume of beads consisting of expandable polymer composition. During this pre-expansion step, a part of the blowing agent originally comprised in the expandable polymer composition leaves the polymer composition. Therefore, the pre-expanded bead will have a decreased amount of blowing agent compared to the expandable bead.
(42) The pre-expansion process according to item (41), wherein the pre-expanded polymer-composition in the form of beads has a bulk density of less than 60 kg/m³, preferably less than 25 kg/m³, more preferably less than 20 kg/m³ when blowing agent content is more than 5%, and higher density ranges when blowing agent content is less than 5% based on polymer content.
   In this way, it is possible to yield different bulk densities suitably adapted for different applications. The bulk density of the pre-expanded beads does not only depend on glass transition temperature T_{g} and the content of blowing agent of the polymer composition, but also on the residence time within a heating step of the pre-expansion process.
(43) The pre-expansion process according to item (41) or (42), wherein the residual content of blowing agent contained in the pre-expanded polymer-composition in the form of beads is less than 7 percent by weight relative to the total composition, preferably more than 2 percent by weight relative to the total composition and more preferably more than 3 percent by weight relative to the total composition.
   According to this embodiment of the invention, the residual amount of blowing agent is set such that it is advantageous for further expansion in a following moulding step.
(44) Pre-expanded polymer-composition in the form of beads, characterized by the expandable polymer-composition according to any one of items (28) to (40) being pre-expanded to beads having a bulk density of less than 30 k/m³, preferably less than 25 kg/m³, more preferably less than 20 kg/m³.

In this way, it is possible to provide a pre-expanded polymer composition within a wide range of bulk densities. Lower density values are accomplished when blowing agent content is more than 5%, and higher density ranges when blowing agent content is less than 5% based on polymer content.

### Detailed description of the invention

The present invention is now described in more detail by referring to further preferred and further advantageous embodiments and examples, which are however presented for illustrative purposes only and shall not be understood as limiting the scope of the present invention.

### Brief description of the Drawings

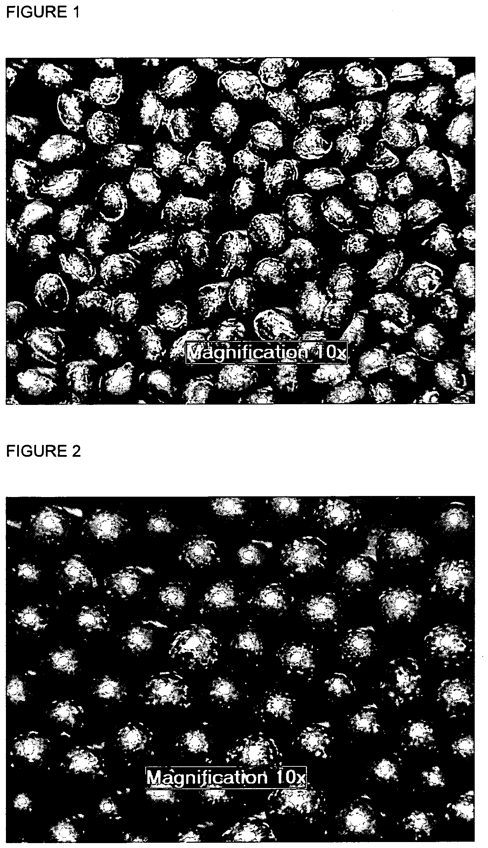

Figure 1 shows expandable polystyrene beads manufactured by conventional extrusion with subsequent under-water pelletizing, microscopically magnified by factor 10. These expandable polystyrene beads comprise 2% by weight of graphite based on total weight of the expandable bead. Said expandable beads do not have a substantially spherical shape but an oval shape. Furthermore, these beads are not substantially monodisperse but strongly differ in size.
Figure 2 shows expandable polystyrene beads manufactured by a conventional suspension polymerisation process, microscopically magnified by factor 10.
   expandable polystyrene beads comprise 1,5 % by weight of graphite based on total weight of the expandable bead, since the suspension for polymerisation becomes unstable if more graphite is added. The expandable beads have a substantially spherical shape, but they strongly differ in size.

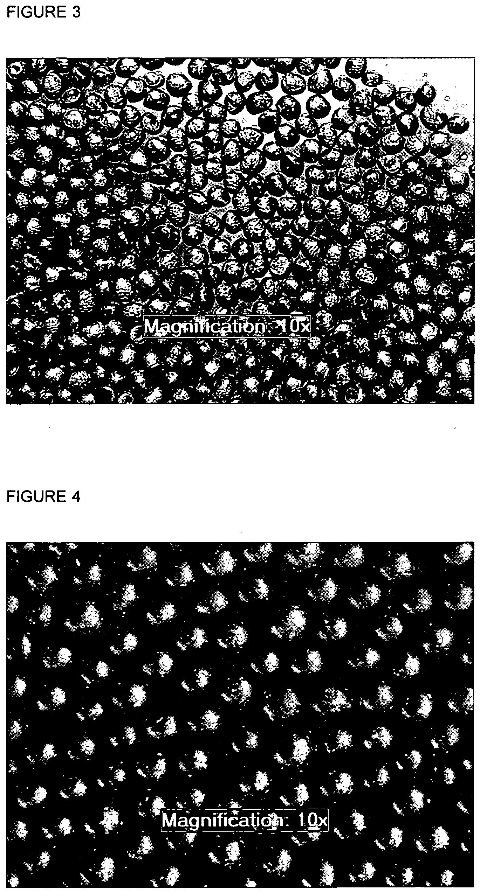

Figure 3 shows a seed material according to the present invention, microscopically magnified by factor 10. As this seed material is manufactured by extrusion with subsequent under-water pelletizing, the seed material has an oval shape. However, the seeds are substantially monodisperse. Said seed material comprises 10 % by weight of graphite based on the total weight of the seed, and the polymeric base material of the seed is polystyrene.
Figure 4 shows expandable polystyrene beads manufactured by the seed polymerisation process according to the present invention, microscopically magnified by factor 10. This Figure demonstrates that the present seed polymerisation surprisingly provides for substantially spherical beads, although starting with the originally oval seed material shown in Figure 3. Furthermore it is demonstrated that the final expandable beads are substantially spherical. The expandable beads comprise 2 % by weight of graphite based on the total weight of the expandable bead.

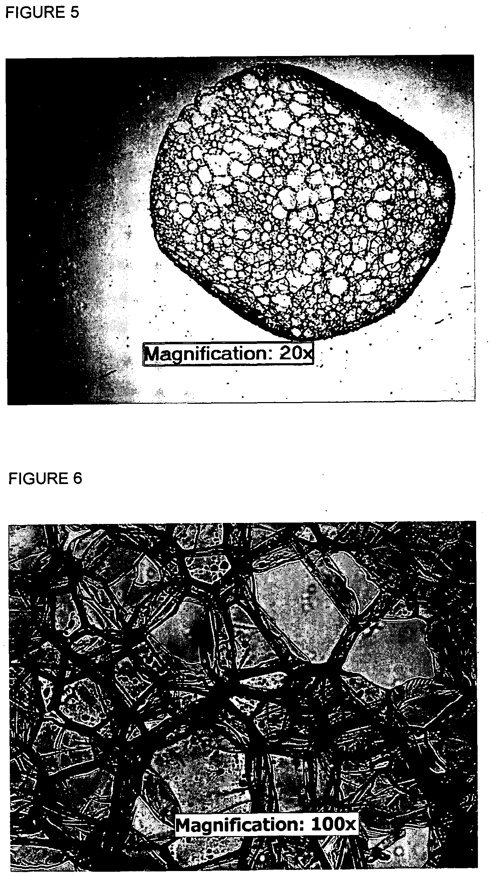

Figure 5 shows a microscopic sectional view (magnification factor: 20) of a pre-expanded polystyrene bead according to the present invention. Said pre-expanded bead was obtained from an expandable polystyrene as shown in Fig. 4, which was pre-expanded for 4 min. at 100°C. In this figure, the black areas represent the polymer matrix, while the colourless areas represent the cells, that is bubbles generated within the polymer matrix due to evaporation of the blowing agent during the pre-expansion step. The bead shows an advantageous, even cell distribution and cell size distribution.
Figure 6 shows a microscopic sectional view of the bead shown in Figure 5, magnified by factor 100. The colourless or dotted areas represent cells, while the black surroundings of said cells represent the polymer matrix. The dots within the cells represent additive in the form of graphite particles. Since the sectional view of the bead is prepared by cutting a thin slice of the pre-expanded bead with a razor, some cells are cut open on the top and bottom side of the slice, and therefore, in these cells no graphite particles are visible. However, it can be seen that cells which are not cut open on the top and bottom side of the slice comprise polymeric cell walls wherein the graphite particles are homogenously distributed in the limited area shown.

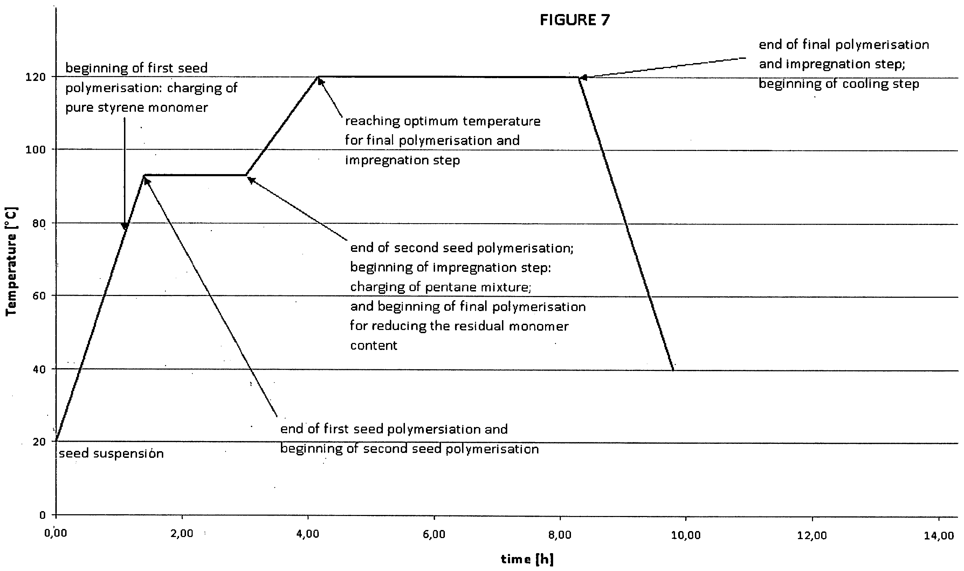

Figure 7 is a temperature versus time diagram of the process of Example 1. The diagram indicates relevant process steps of Example 1, which is explained below.

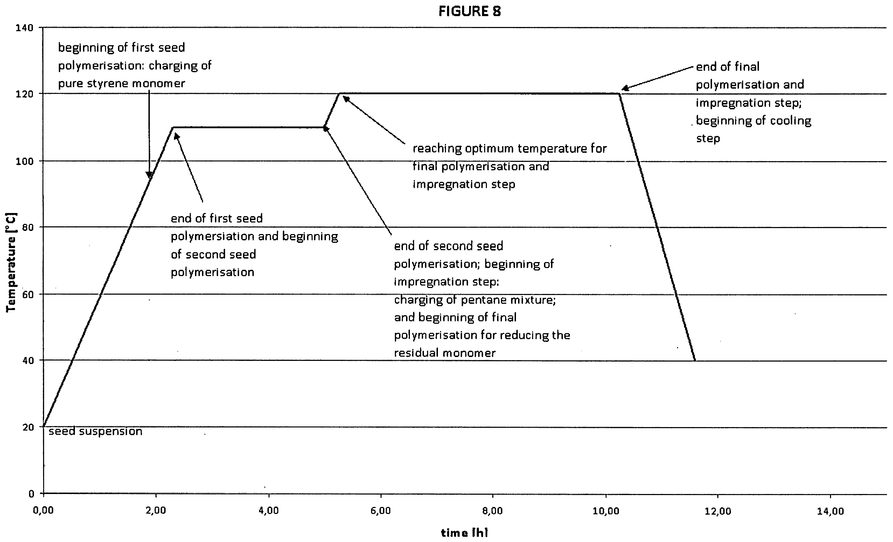

Figure 8 is a temperature versus time diagram of the process of Example 3. The diagram indicates relevant process steps of Example 3, which is explained below.

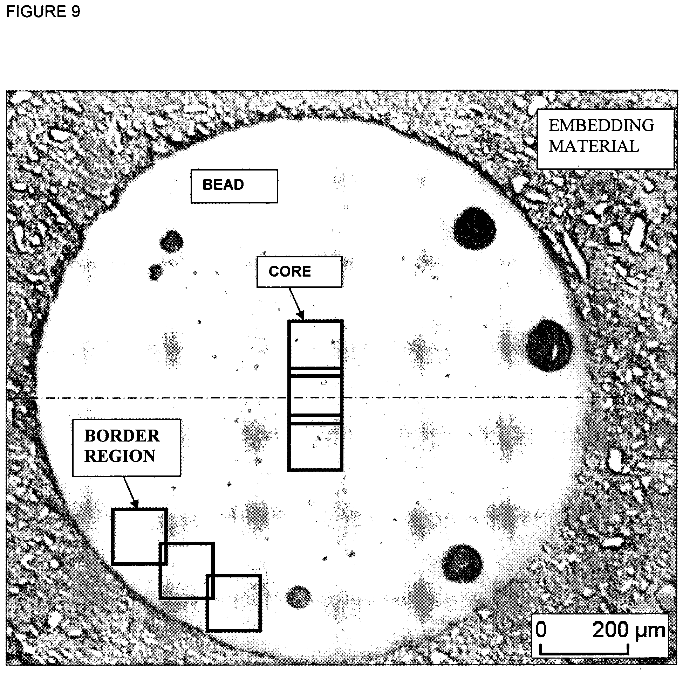

Figure 9 is a light microscopic illustration of an expandable bead showing a particular distribution of additive obtainable by the process according to the present invention.

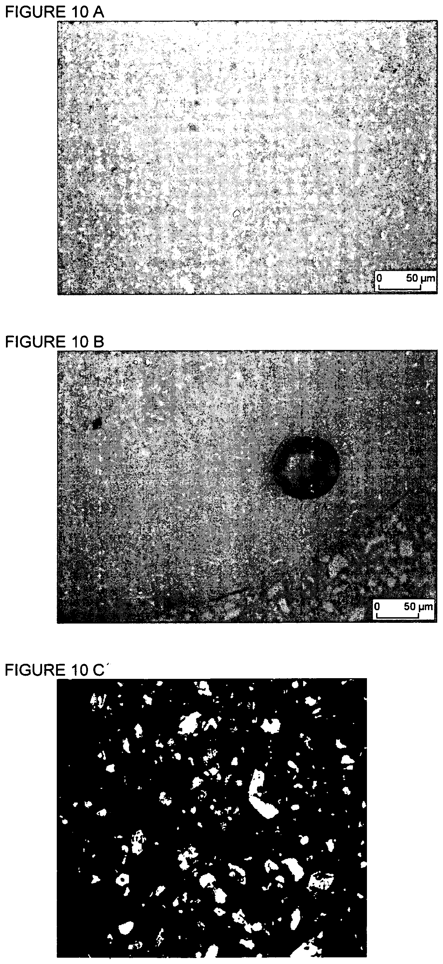

Figures 10A and 10B show in higher (200-fold) magnification the distribution of additive representing a core region and a border region respectively of the light microscopic illustration of Figure 9.
Figure 10C shows in higher (500-fold) magnification a binary black/white representation of relatively high volume ratio in the distribution of additive representing in a core region, representing a core region of the light microscopic illustration of Figure 9, wherein white dots denote granular additive (graphite) and black areas denote EPS matrix of the expandable bead.

In order to improve a process for the preparation of an expandable polymer composition in the form of beads, extensive test series were carried out by the inventors to find critical factors that are particularly suited to incorporate additive(s) into an expandable polymer composition.

Conventionally, an expandable polymer composition comprising additive(s) may be obtained by a one-step suspension polymerisation. In such a one-step suspension polymerisation, a suspension is formed of monomers and optional comonomers, initiators, optionally of different kinds having different half-lives, water, suspending agent and additive(s). Then, this suspension is heated such that polymerisation is effected.

In an alternative variant of the above conventional one-step process, a polymer may be solved in the monomer first, and then suspension polymerisation is effected.

However, problems may occur when additive(s), e.g. in particulate form, is/are present within the above described conventional suspension polymerisation processes. In particular, the additive(s) may affect the stability of the suspension, especially when added in large amounts. For example, coagulation may occur within the suspension. The higher the amount of additive(s) within the suspension is, the higher is the risk of an unstable suspension. Therefore, suspension polymerisation is not suitable for incorporating large amounts of additive(s) into an expandable polymer composition.

Furthermore, suspension polymerisation is relatively exothermic. Therefore, there is a problem concerning the cooling capacity, especially at molecular weights of less than 300,000 g/mol. Besides, the beads obtained by these suspension polymerisation processes have a broad bead size distribution.

Alternatively, additive(s) may be incorporated into an expandable polymer composition by extrusion and subsequent under-water pelletizing. In such an extrusion process, a polymer or blend of polymers is mixed with one or more additives to be incorporated into the polymer or blend of polymers, wherein blowing agent is added downstream of the extruder screw. The mixture is then pushed through one or more heaters and optionally through one or more mixers, and finally through a die. When the die has the shape of one or more circular opening(s), oval shaped particles or beads are formed after under water pelletizing.

However, conventionally performing only an extrusion process in the preparation of an expandable polymer composition does not provide a good cohesion between the additive(s) and the polymer matrix. Therefore, depending on the nature of the additive, for example dusts of additive(s) are likely to be released from the expandable polymer composition during subsequent pre-expansion and moulding steps, especially if added in desirable large amounts. Such dusts represent a risk in a production plant, because they may be harmful or explosive.

Thus, dusts of particulate additive(s) may form when the additive(s) is/are not handled in an appropriate way. Dust worsens working conditions within the production plant and pollutes the environment. As a part of the handling of the additive(s) will be carried out by human beings, there is always a safety risk during production.

A process according to one aspect of the invention provides an expandable polymer composition comprising additive(s), wherein additive(s) is/are incorporated by performing seed polymerisation with a seed material comprising one ore more additive(s) incorporated by compounding. As the process in one or more consecutive seed polymerisation steps is performed by providing additive(s) which is/are already appropriately comprised within the seed material, a stable and safe process for obtaining expandable polymer compositions is ensured. On the one hand, there will be no suspension stability problems during seed polymerisation, because there is no tendency towards coagulation due to the presence of particles of additive(s) which may coagulate/agglomerate. Therefore, depending on critical factors as disclosed herein, either a homogeneous distribution, or a tailored distribution of the additive(s) in the obtained beads can be attained. On the other hand, the tendency to release dusts of additive(s) when handling particulate additive(s) as the starting material(s) is reduced or minimized. Consequently, safer working conditions are provided, and contamination of the production plant or during later use of the product is reduced.

Furthermore, the seed material is already a pre-polymerized polymer composition, and polymerisation preferably takes place at a monomer content, relative to the amount of polymer, which is continuously kept maximally at 40% by weight. Therefore, the reaction will be less exothermic compared to conventional suspension polymerisation starting from monomers or polymer-solubilised monomer composition only. This not only enables a beneficial control of the molecular weight and molecular weight distribution. Furthermore, the tendency towards coagulation within a suspension is much lower in a less exothermic polymerisation reaction, which in turn provides for an enhanced homogeneity within the final expandable polymer composition.

For this reason, the present invention further enables control of the heat energy released by the polymerisation reaction. For example, the relation between the amount of seed material and the amount of monomer may be selected such that the seed polymerisation is less exothermic, and therefore, the system is less prone to problems of cooling capacity.

As far as desired and acceptable in view of homogeneity, polymerisation stability and/or cooling capacity, a major part of the whole charging amount of additive(s) can be added to the seed material, whereas the remainder part may be added in one or more subsequent polymerisation steps.

According to another aspect of the invention, the seed polymerisation is carried out by the steps of:
a) making an aqueous suspension comprising at least seed material comprising a polymeric base material and one or more additive(s), polymerisation initiator(s), suspension stabilizer(s) and water, wherein the one or more additive(s) is (are) evenly distributed in the seed material,
b) subjecting the seed material to a first seed polymerisation with at least one or more kinds of monomer(s) and optionally with one or more kinds of polymerisation initiator(s), wherein said first seed polymerisation is effected at a temperature allowing polymerisation to proceed at a first, relatively slow polymerisation rate relative to the subsequent (second) proper polymerisation rate,
c) increasing the temperature to a polymerisation temperature allowing a second seed polymerisation to proceed at a second polymerisation rate higher than the first polymerisation rate, and
d) optionally performing a third or further seed polymerisation.

The above mentioned aspect provides a polymerisation reaction which can be advantageously controlled and is less exothermic, since the first polymerisation of step b) is applied at a substantially slow first polymerisation rate and the content of monomer relative to the seed material can be suitably selected. Therefore, the system is less prone to problems of cooling capacity, and thus, a reliable, robust and efficient process is provided. Furthermore, steps b) to d) provide for a desired distribution of one or more additive(s) within the beads of polymer composition. For example, homogenous distribution is attained by controlling diffusion of monomer(s) and polymerisation initiator(s) into the seed material. Targeted distribution of the additive can be realized as well by taking account of relevant process conditions.

Generally, the condition of the aqueous suspension of step a) of the above described aspect depends on the surface tension of water used. In the present process, a "styrene in water" suspension is needed. However, in the case where the surface tension of water used is not suitable, an inverse suspension, that is a "water in styrene" suspension will form which makes it impossible to properly carry out the present seed polymerisation. Therefore, the person skilled in the art has to provide measures for suitably adjusting the surface tension of water used in order to form a "styrene in water" suspension, e.g. by an upstream water-treatment such as deionization and/or by adding suitable surface active agents.

Furthermore, said aqueous suspension of step a) is preferably stabilized by one or more suspension stabilizers. Suitable suspension stabilizers may be selected from the group consisting of water-soluble high molecular organic compounds such as cellulose derivatives, polyols, polyvinylalcohols and polyalkylene oxides or almost water-insoluble inorganic particles such as tricalciumphosphate or sodium pyrophosphate.

The monomer(s) used in step b) are soluble in its/their own polymer, so as to allow diffusion of monomer(s) into the seed during polymerisation. This assists in providing desired distribution of the additive(s) comprised in the expandable polymer composition.

When the seed material is obtained by extrusion and subsequent under-water pelletizing, high amounts of additive(s) can be incorporated into the seed material. It was surprisingly found that pellets provided by an extrusion process represent an appropriate seed material for obtaining substantially monodisperse beads of expandable polymer composition. Said pellets are substantially oval particles. Surprisingly, during seed polymerisation, the pellets deform and become substantially spherical beads.
The additive(s) incorporated into the seed material by compounding are preferably selected among inorganic or organic additive(s), preferably one or more athermanous materials, one or more flame retardant(s), one or more thermoplastic elastomer(s), one or more compatible polymer(s), one or more nucleating agent(s), one or more plasticizers, one or more pigment(s) or dye(s), one or more filler(s) and one or more special effect additive(s).

According to a particularly preferred selection of additive according to the present invention, the specific thermal conductivity value of a moulded object can be set by incorporating an athermanous material. The specific thermal conductivity is also called "lambda". Mainly three different kinds of thermal conduction contribute to said lambda value: conduction through gas, conduction through solid and conduction through radiation. It is known in the art that the thermal conduction through radiation may significantly be lowered by incorporating materials absorbing infrared radiation, also called "athermanous materials", into the expandable polymer compositions. For insulation application such as housing insulations, a low value for lambda is highly desirable. Especially in view of the global warming due to extensive combustion of fossil fuels, it is highly desirable to reduce fuel consumption by housing insulations having as low lambdas as possible. By incorporating athermanous material as the additive(s) into the seed material, the lambda value of a moulded object can be set within an advantageous range. Suitable athermanous materials include, for example, aluminum, aluminum oxide, non-metal oxides, carbon black and graphite. By carrying out numerous experiments, the present inventors found out that graphite is the most effective athermanous material for reducing the lambda value of a moulded object. Therefore, graphite is the preferred athermanous material.

According to another particularly preferred selection of additive according to the present invention, the self extinguishing properties of an expandable polymer composition or a moulded object manufactured thereof may be of importance, for example in an application in the field of housing insulations. Typically, halocarbons, in particular hexabromocyclododecane, have been used as flame retardants for expandable polymer compositions. However, the use of such halocarbons may be banned by law due to environmental concerns. Therefore, there is a need for new, more environmental friendly flame retardants. By carrying out numerous experiments, the present inventors found out that flame retardant and thermoplastic polymers or meltable chemicals such as melamine formaldehyde or cyanurate resins, phenol formaldehyde resins, polychlortrifluorethylene (PCTFE) and polyvinylchloride (PVC) and/or, in the case of polystyrene as the main polymer matrix of the expandable polymer composition, flame retarding thermoplastic polymers such as polypherioxilene oxide (PPO) and polyphenoxilene sulphide (PPS) can be selected as alternative, organic flame retardants. Furthermore, organic phosphates and organophosphinates can be used as organic flame retardants. Suitable inorganic flame retardants can be selected from the group consisting of phosphates, aluminum or magnesium hydroxides, antimony trioxide, boron compounds, in particular borates, and various hydrates.

According to yet another particularly preferred selection of additive according to the present invention, the "cushioning properties" of the expandable polymer composition or a molded object manufactured thereof is important. Depending of the kind of packaging, a hard or flexible molded object is needed. The flexibility of an expandable polymer composition can be advantageously set by incorporating thermoplastic rubber(s) and/or elastomers. For expandable polystyrene compositions (EPS) for example, the present inventors found out that styrene block-copolymers representing thermoplastic elastomers, such as styrene-butatien-styrene (SBS), styrene-ethylene-butadiene-styrene (SEBS), styrene-ethylene-propylene-styrene (SEPS), styrene-ethylene-ethylene-propylene-styyrene (SEEPS) and methacrylate-butadiene-styrene (MBS), in particular styrene-butatien-styrene (SBS), are particularly suitable to set the cushioning properties of EPS.

According to a further preferred selection of additive according to the present invention, the heat distortion temperature of the expandable polymer composition or a molded object manufactured thereof is set within a suitable range. For example, molded objects used as construction elements should have a high heat distortion temperature. Therefore, one or more compatible polymers can be incorporated into the expandable polymer compostion in order to suitably set the heat distortion temperature of the expandable polymer composition. Suitable compositions may include acrylic polymers such as PMMA, polyphenylensulfide (PPS), para-methyl styrene polymers (PMS), polyolefines such as PE, or copolymers thereof compatible with the polymer matrix, but are not limited thereto.

According to a still further preferred selection of additive according to the present invention, a filler may be incorporated into the expandable polymer composition. A filler may be a low cost additive for reducing production costs by partly replacing the relatively expensive polymer matrix of the expandable polymer composition. Preferably, (a) water insoluble material(s)/compound(s) is/are used as such a filler.

Besides of the additives already contained in the seed, further additives from the above defined group may alternatively or in addition be added to the seed suspension before or after heating to polymerisation temperature. In this case, the suspension should be kept stable and allow proper incorporation of the further substances.

The polymerisation initiator is a radical former for initiating and maintaining the seed polymerisation. Among the possible radical formers known in the art, those which can be thermally activated are preferred. Thermally activable peroxides are particularly suitable for the present seed polymerisation. The polymerisation initiator is preferably selected also in view of its suitability for the seed suspension to be polymerised. For example, the presence of carbon blacks or graphites may substantially delay radical polymerisation of vinyl monomers in general when polymerisation initiators comprising benzene rings are used. Therefore, in the case that the additive is carbon black or graphite, polymerisation initiators comprising benzene rings may not be used alone as the main polymerisation initiators allowing temperature controlled polymerisation within the seed suspension, but can be used as a synergist, as derivable from Example 1 described below.

The first seed polymerisation can be carried out at constant temperature as well as at a temperature range being between a predetermined start temperature and a first polymerisation temperature. The selection of the constant temperature or the temperature range of said first seed polymerisation is not only done in view of the activation temperature of the polymerisation initiator, but also in view of the point of time for adding blowing agent(s). For example, if the start temperature of the first seed polymerisation is relatively low, the pressure within the reactor will be quite low, and therefore blowing agent may be added already at an early stage of polymerisation. However, the disadvantage of selecting a relatively low start temperature is that said start temperature will be - in most cases of polymers used - below the glass transition temperature T_{g} of the polymer, and therefore diffusion of monomer and polymerisation initiator will be very slow and thus the first seed polymerisation will be very time and energy consuming.
On the other hand, if a relatively high start temperature is selected for the first seed polymerisation, such that said start temperature is above T_{g} of the polymer, the particles/beads of the polymer composition will be soft, and therefore a fast diffusion of monomer and polymerisation initiator can be effected and thus the first seed polymerisation be done within a relatively short time range. However, due to the relatively high temperature, there may be a high pressure in the reactor and therefore charging with blowing agent may be carried out at a later stage.

The beads obtained from the seed polymerisation may be coated, as the untreated surface of the expandable polymer composition in the form of beads may exhibit poor processing characteristics. For example, one problem during following processing of beads is electrostatic charging. Therefore, it is preferred to coat the beads finally obtained with an effective anti-static agent. The anti-static agent may be selected from the group consisting of esters of fatty acids and amines, quaternary ammonium salts, alkylphosphates and fatty alcohols condensed with ethylene oxide on to propylene oxide. Furthermore, it is preferred to coat the finally obtained beads with an anti-lumping agent. An anti-lumping agent prevents the beads from fusing together during the pre-expansion step. Anti-lumping agents may be selected from the group consisting of metal stearates, inorganic powders such as SiO₂ and CaCO₃ and powders of polymeric materials such as polyamide waxes.

The beads directly obtained from the process according to the invention are preferably substantially monodisperse defined by a coefficient of variation of less than 15%, preferably less than 13% and more preferably less than 11%, and/or have a fineness defined by having a maximum particle size between 500 to 3000 µm. Such an advantageous setting of the maximum particle size is enabled by a beneficial control of the growth of the polymer composition in the form of beads. The seed polymerisation process of the present invention is preferably carried out by providing substantially monodisperse seed material. In order to keep this substantially monodispersity during polymerisation, it is preferred to take suitable measures in order to inhibit the formation of new polymer particles outside the seed material. Therefore, inhibitors may be added to the water phase and/or organic phase, preferably when growing the seeds to relatively big bead sizes.

The polymer composition is impregnated with at least one blowing agent. This impregnation step should be carried out during or after seed polymerisation. In order to avoid a retard of the polymerisation due to a dilution effect, it is preferred to carry out the impregnation step during the final polymerisation step(s) or after polymerisation, e.g. after work-up of the final expandable polymer composition. Preferably and efficiently, the period of blowing agent impregnation overlaps or coincides with the period of this final polymerisation. The residual monomer content of the final expandable product can be reduced to less than 1.000 ppm by conducting such final polymerisation.

In a particularly preferred embodiment, the content of the blowing agent within the expandable polymer-composition in the form of beads is s 7 percent by weight relative to the total composition. According to this embodiment, the so called "bulk density" ρ_{bulk} of the moulded product may be set to a predefined value or range. For so called "low density" moulded products, the bulk density ρ_{bulk} is about 10 to 30 kg/m³, while "high density" moulded products have a bulk density ρ_{bulk} in a range of 30 < ρ_{bulk} ≤ 120 kg/m³. The bulk density is an important characteristic of the moulded object, because it not only influences the weight but also the physical characteristics of the moulded object. Thus, the application of the moulded object depends on its bulk density.

By using seed material comprising the above mentioned additives, a desired distribution of such additives within the expandable polymer composition can be attained. It is believed that in the seed polymerisation system used in the present invention monomer and initiator can effectively diffuse into the seed material during the seed polymerisation process. At the same time, distribution of additive can be controlled in a targeted and well aimed manner according to the present invention. Relevant control conditions include:
(aa) Adding monomer step-wise or gradually, and paying attention to limited monomer content during seed polymerisation(s): unlike a full and complete prior impregnation, this measure leads to a limited and relatively low monomer content and availability in the growing beads during seed polymerisation and consequently favours an irregular distribution. The slower monomer is added or the more it is limited, the more irregular is the additive distribution in the finally obtained beads.
(bb) Use of de novo synthesized polymer such as styrene polymers or copolymers, absent of blowing agent, in the seed material: This measure assists a controllable movement of additive during seed polymerisation when the polymer in the growing seed is adjusted to an appropriate softness under heating. Further, since according to this condition the seed material is free of blowing agent and is free of previously pre-expanded or expanded polymers, there is a better even distribution of additive in the seed material and thus controllability of additive distribution during the seed polymerisation process.
(cc) Melt flow index of the polymer(s) used for the seed material, in particular observing the presence of a blend of two or more compatible polymers having different melt flow indices, respectively: This measure contributes to enable tailored additive distribution by virtue of selecting appropriate polymer material in the seed material to adopt either a relatively high MFI value, which would favour easy movement at soft/melt conditions during seed polymerisation under heating and thus tends to a more homogeneous distribution, whereas relatively low MFI value rather favours slow movement and thus tends to a more irregular distribution in the sense of adopting higher volume ratio in the core and lower volume ratio in a border region. A blend of two or more compatible polymers having different MFIs even more beneficially allows balancing between movement of additive from the seed material to the growing beads surface, and the progress of the polymerisation.
(dd) Polymerisation rate during seed polymerisation, in particular both the first and second polymerisation rate, relative to polymerisation temperature and activation temperature(s) of optionally different polymerisation initiators. Adjustment of a relatively slow polymerisation rate, and the ability to control relative rates by separation into a fist slow phase and a second fast phase, opens the possibility to balance between movement of additive from the seed material to the growing beads surface, and the growth rate (growing radius) of the bead.
(ee) Type of additive, especially whether it is particulate or not: For example, the use of particulate additive tends to the formation of an irregular distribution, especially when used in combination with a control of conditions (aa), (bb) and (cc). Whereas non-particulate additive(s) contribute to and may provide a homogeneous distribution.

As will be readily understood by a person skilled in the art, any one, or a combination of the above described relevant process conditions can be utilized. Hence, according to this preferred embodiment, the additive(s) has (have) a tailored distribution within the final polymer composition of the expandable beads The following structures can be advantageously realized in this manner:
Either, the additive is homogenously distributed within the final polymer composition; or, alternatively, it is possible to provide an irregular distribution of the additive(s) within the obtained beads, which is defined by a relatively high volume ratio in a core of the respective beads and, compared to the core, a relatively low volume ratio located in a more outer region and especially in a border region of the respective beads. In a particular embodiment, the distribution of the additive(s) within the obtained beads can be defined, at least in part of the beads and viewed from the core to the outer surface of a respective expandable polymer bead, by a gradient from a relatively high volume ratio towards a relatively low volume ratio.

Figure 9 and, in higher magnification, Figures 10A and 10B illustratively shows an example of a special distribution of additive, which is obtainable by the process according to the present invention. In this example, granular additive, here graphite, has been incorporated into seed polymer formed by thorough compounding into two types of polystyrene polymers with different MFIs (respectively unexpanded, free of blowing agent) and subjecting the same to seed polymerisation similar to the processes as described in the Examples below. Samples of the obtained expandable polymer beads were then subjected to the following analysis: the black EPS beads were embedded in a 2-component cold embedding agent "Demotec 15plus" (obtained from Demotec, Nidderau, Germany), then rubbed until a central cross-section is revealed and subsequently polished. These prepared samples were then subjected to light microscopic photographic visualisation (Fig. 9) and viewed at suitable magnification at different locations with respective beads. Particulate additive is visible as reflecting dots within greyish EPS matrix. Fig. 10A shows a representation of a core region and Fig. 10B shows a representation of a border region. Larger dark areas in the micrographs represent bubble artefacts generated by blowing agent evaporation when preparing the sample bead for analysis, probably during the rubbing process. For further evaluation and quantitation, the respective regions (disregarding aforementioned bubble artefacts) were subjected to automatic image analysis by way of binarisation at appropriate magnification ensuring measurability individual additive particles (cf. Fig. 10C at 500-fold magnification). In the binarised image, the particles of the additive appear as clear white dots (reflecting light), whereas EPS matrix between the additive particles appear black (absorbing light without reflection). As can be seen from a comparison of Figs 10A and 10B, the volume ratio of graphite in the beads is significantly higher in a core region compared to a border region, demonstrating an irregular distribution of additive throughout the respective beads. This irregular distribution has been confirmed to be repeatedly obtainable by appropriate process conditions according to the present invention. Further, it has been demonstrated that the process according to the present invention allows to vary between different volume ratios of a core region relative to a border region, or to vary between different distribution gradients from the core to the outer surface of beads. For example, respective mean volume ratios ranging from about 2.0 to about 16 % in a core, and relatively lower mean volume ratios ranging from about 0.5 to about 3 % in the border region have been produced in different production batches, when taking the average volume of the beads as 100% as the reference. Of course, these examples are for illustrative purposes. Other volume ratios are of course feasible as well, using adjustments of relevant process conditions described above.

Incorporation of the above mentioned additives thus provides for an advantageous tailoring of the physical and chemical properties of the expandable polymer composition, or pre-expanded polymer compositions in larger bead form, and of moulded objects respectively obtained therefrom.

A pre-expansion process according to one aspect of the invention comprises subjecting the expandable polymer composition in the form of beads to a heat treatment. The advantageous features of the polymer composition provide for an improved operability of the polymer composition, which allows for reducing the formation of dusts of particulate additive(s) during the pre-expansion step.

Another aspect described herein is an expanded moulded object, obtained by further expanding the pre-expanded polymer composition. It is known that the thermal conductivity value of moulded objects obtained from expandable polymer compositions depend on the bulk density of the moulded product. As the thermal conductivity of the air in the cells of the moulded product contributes the most to the total heat transport of a moulded product, thermal conductivity of a moulded product decreases with increasing bulk density. Thus, a low bulk density is advantageous for a low consumption of polymer material, but disadvantageous for attaining low thermal conductivity values. This problem can be solved by the incorporation of athermanous material as the additive(s), which provides for a reduction of the thermal conductivity by reducing the passage of infrared rays through the moulded object.
As described above, the point in time and initial location and the surrounding condition of initially incorporated additive(s) in the appropriate seed material is significant for obtaining expandable polymer compositions by a stable and safe process. Therefore, the present process for the preparation of an expandable polymer-composition provides a unique combination of features to balance counter-acting effects, by enabling to load a high amount of additive(s), while realizing desirous and targeted distribution and an advantageous cohesion between said additive(s) and the polymer matrix.

According to a preferred embodiment, the expanded moulded objects comprising athermanous material(s) as the additive(s) have a thermal conductivity λ which is less than 0.031 W/(m·K), preferably less than 0.030 W/(m·K) and more preferably less than 0.029 W/(m·K), wherein the bulk density is less than 30 kg/m³, preferably less than 25 kg/m³, more preferably less than 20 kg/m³. It was surprisingly found that such moulded objects do not only exhibit exceptional low thermal conductivity values in combination with an advantageous low bulk density, but also improved mechanical strength and premium quality appearance, while excellent processability is provided in the moulding step. The pre-expanded polymer composition in the form of beads representing the starting material of the moulding process exhibits advantageous cohesion between the additive(s) and the polymer matrix and targeted distribution of the additive(s) within its beads. The combination of these characteristics provides for an improved adhesion between beads of polymer composition when moulded together by heating the pre-expanded polymer composition above the glass transition temperature T_{g} of the polymer composition. Thus, a moulded object having improved mechanical strength can be controlled. Furthermore, due to the combination of good cohesion of the additive(s) between the polymer matrix and homogeneous distribution within the beads, no dust to limited dust will be released during the moulding process. Therefore, the working conditions of the moulding process are improved and safety risks of the process are reduced.

The following examples are merely illustrative of the present invention and they should not be considered as limiting the scope of the invention in any way. The examples and modifications or other equivalents thereof will become apparent to those versed in the art in the light of the present entire disclosure.

### Examples

### Example 1

A suspension or mixture of 100 parts by weight water, 0.8 parts by weight sodium pyrophosphate, 1.6 parts by weight of magnesium sulphate, 21.6 parts by weight of seeds containing 0.86 parts by weight of hexabromocyclododecane, 0.05 parts by weight of tert-butylperoxy-2-ethylhexyl carbonate (Trigonox 117 from Akzo Nobel), 0.6 parts by weight of tert-butylperoxy-2-ethylhexanoate (Trigonox 21 S from Akzo Nobel) and 0.27 parts by weight of dicumylperoxide (Perkadox BC-FF) was agitated in a polymerisation reactor at ambient temperature and ambient pressure. Said suspension represents the seed suspension indicated in Fig. 7 of the accompanying drawings.

The seed used was under water granulated to off-round particles of an approximate size of 0.7 mm diameter, containing 2.2 parts by weight of graphite (MF2/99.5-99.9 RG from NGS Naturgraphit GmbH) and 18.5 parts by weight of suspension made general purpose polystyrene mixture (Jackopol TS and PS from Jackon GmbH, wherein Jackopol TS has a melt flow index of 150 g/10 min. at 200 °C/5 kg, and Jackopol PS has a melt flow index of 6 g/10 min. at 200°C/5 kg).

After closing the reactor, the suspension was heated to 93°C, wherein 87 parts by weight of pure styrene monomer was continuously charged from reaching 78°C for 105 minutes to enable the polymer particles to grow until desired size. As shown in Fig. 7, the first seed polymerisation starts with the charging of the styrene monomer and ends when the polymerisation temperature of the second seed polymerisation is reached (indicated in Fig. 7 as "first seed polymerisation"), while styrene monomer is still charged during the second seed polymerisation at 93°C. Thereafter, the suspension was heated to 120°C in order to perform a final polymerisation for reducing the residual monomer content and held at this temperature for 250 minutes after start charging 8 parts by weight of pentane (20% iso-pentane and 80% n-pentane) from 93°C (cf. Fig. 7).

Polymerisation under pressure at 93°C went substantially controlled with low exothermic reaction. The styrene monomer content, relative to the amount of polymer, was 18% when reaching 93°C.

The reactor was then cooled to below 40°C and discharged to the holding tank, and after dewatering and drying, the beads were surface treated with 0.05 parts by weight of zinc stearate. The particles were substantially spherical, and size classification as such was hardly required and thus the particles could directly be used for processing.

Pre-expansion, silo maturation and moulding went extraordinary well, physical characteristics were comparative with conventional "white" EPS comprising no athermanous material, and the lambda value reached was below 0.028 W/mK at a moulded density of 20 kg/m³.

### Example 2

Exactly the same procedure as in Example 1 was applied, however with a polymerisation temperature of 90°C.

Polymerisation under pressure at 90°C went substantially controlled with low exothermic reaction. The styrene monomer content, relative to the amount of polymer, was 25% when reaching 90°C, which is higher than the targeted value for the styrene monomer content.

Product characteristics were substantially the same as for Example 1.

### Example 3

A suspension or mixture of 100 parts by weight of water, 0.6 parts by weight of sodium pyrophosphate, 1.3 parts by weight of magnesium sulphate, 21.5 parts by weight of seeds and 0.5 part by weight of tert-amylperoxy-2-ethylhexyl carbonate (Trigonox 131 from Akzo Nobel) was agitated in a polymerisation reactor at ambient temperature and ambient pressure. Said suspension represents the seed suspension indicated in Fig. 8 of the accompanying drawings.

The seeds used were under water granulated to off-round particles of an approximate size of 0.7 mm diameter, also containing 2.1 parts by weight of graphite (MF2/99.5-99.9 RG from NGS Naturgraphit GmbH) and 19.5 parts by weight of suspension made general purpose polystyrene mixture (Jackopol TS and PS from Jackon GmbH,wherein Jackopol TS has a melt flow index of 150 g/10 min. at 200 °C/5 kg, and Jackopol PS has a melt flow index of 6 g/10 min. at 200°C/5 kg).

After closing the reactor the suspension was heated to 110°C, wherein 68.8 parts by weight of pure styrene monomer was continuously charged from reaching 95°C for 180 minutes to enable the polymer particles to grow until desired size. As shown in Fig. 8, the first seed polymerisation starts with the charging of the styrene monomer and ends when the polymerisation temperature of the second seed polymerisation is reached (indicated in Fig. 8 as "first seed polymerisation"), while styrene monomer is still charged during the second seed polymerisation at 110°C. Thereafter, the suspension was heated to 120°C in order to perform a final polymerisation for reducing the residual monomer content, and held at this temperature for 300 minutes after start charging 4.8 parts by weight of pentane (20% iso-pentane and 80% n-pentane) from 110°C (cf. Fig. 8).

Polymerisation under pressure at 110°C went substantially controlled with low exothermic reaction.

The reactor was then cooled to below 40°C and discharged to the holding tank, and after dewatering and drying the beads were surface treated with 0.05 parts by weight of zinc stearate. The particles were substantially spherical, and size classification as such was hardly required and thus the particles could directly be used for processing.

Pre-expansion, silo maturation and moulding went extraordinary well, and physical characteristics were comparative with the normal "white" EPS comprising no athermanous material, and the lambda value reached was below 0.028 W/mK at a moulded density of 20 kg/m³.

### Example 4

A suspension or mixture of 100 parts by weight of water, 0.7 parts by weight of sodium pyrophosphate, 1.3 parts by weight of magnesium sulphate, 21.7 parts by weight of seeds, 0.1 part by weight of tert-butylperoxy-2-ethylhexyl carbonate (Trigonox 117 from Akzo Nobel) and 0.6 parts by weight of 1,1,3,3-tetramethylbutylperoxy-2-ethylhexanoate (Trigonox 421 from Akzo Nobel) was agitated in a polymerisation reactor at ambient temperature and ambient pressure.

The seeds used was under water granulated to off-round particles of an approximate size of 0.7 mm diameter, also containing 2.4 parts by weight of graphite (MF2/99.5-99.9 RG from NGS Naturgraphit GmbH) and 19.5 parts by weight of suspension made general purpose polystyrene mixture (Jackopol TS and PS from Jackon GmbH,wherein Jackopol TS has a melt flow index of 150 g/10 min. at 200 °C/5 kg, and Jackopol PS has a melt flow index of 6 g/10 min. at 200°C/5 kg).

After closing the reactor the suspension was heated to 85°C, where 67 parts by weight of pure styrene monomer was continuously charged from reaching 60°C for 113 minutes to enable the polymer particles to grow until desired size. Thereafter, the suspension was heated to 110°C and held at this temperature for 300 minutes after start charging 6:7 parts by weight of pentane (20% iso-pentane and 80% n-pentane) from 85°C.

Polymerisation under pressure at 85°C went substantially controlled with low exothermic reaction. The styrene monomer content, relative to the amount of polymer, was 10% when reaching 93°C.

The reactor was then cooled to below 40°C and discharged to the holding tank, and after dewatering and drying, the beads were surface treated with 0.05 parts by weight of zinc stearate. The particles were substantially spherical, and size classification as such was hardly required and thus the particles could directly be used for processing.

Pre-expansion, silo maturation and moulding went extraordinary well, and physical characteristics were comparative with the normal "white" EPS comprising no athermanous material, and the lambda value reached was below 0.028 W/mK at a moulded density of 20 kg/m³.

### Example 5

An organic peroxide solution was prepared beforehand containing 75 parts by weight of styrene monomer and 1.0 parts by weight of dibenzoylperoxide (Perkadox L-W 75 from Akzo Nobel) and 0.1 parts by weight of tert-butylperoxy 2-ethylhexyl carbonate (Trigonox 117 from Akzo Nobel).

A suspension or mixture of 100 parts by weight water, 0.73 parts by weight sodium pyrophosphate, 1.46 parts by weight of magnesium sulphate and 23.4 parts by weight of seeds was agitated in a polymerisation reactor at ambient temperature and ambient pressure. Said suspension represents the seed suspension.

The seed used was under water granulated to off-round particles of an approximate size of 0.7 mm diameter, containing 5.1 parts by weight of a styrene-butadiene-styrene block co-polymer (Kraton D 1152 ES from Kraton Polymers GmbH) as thermoplastic elastomer for setting the cushioning properties of the polymer composition and 17.1 parts by weight of suspension made general purpose polystyrene mixture (Jackopol TS and PS from Jackon GmbH,wherein Jackopol TS has a melt flow index of 150 g/10 min. at 200 °C/5 kg, and Jackopol PS has a melt flow index of 6 g/10 min. at 200°C/5 kg).

After closing the reactor, the suspension was heated to 84°C, wherein 76 parts by weight of the organic peroxide solution was continuously charged from reaching 65°C for 300 minutes to enable the polymer particles to grow until desired size. The first seed polymerisation starts with the charging of the SPO solution and ends when the polymerisation temperature of the second seed polymerisation is reached, while SPO solution is still charged during the second seed polymerisation at 84°C. Thereafter, the suspension was heated to 110°C in order to perform a final polymerisation for reducing the residual monomer content and held at this temperature for 300 minutes after start charging 4.2 parts by weight of pentane (20% iso-pentane and 80% n-pentane) from 85°C for impregnation.

Polymerisation under pressure at 85°C went substantially controlled with low exothermic reaction. The styrene monomer content, relative to the amount of polymer, was about 10% when reaching 85°C.

The reactor was then cooled to below 40°C and discharged to the holding tank, and after dewatering and drying the beads were surface treated with 0.05 parts by weight of zinc stearate. The particles were substantially spherical, and size classification as such was hardly required and the obtained expandable beads could directly be used for processing.

Pre-expansion, silo maturation and moulding went extraordinary well, and physical characteristics were towards less strength comparable with the conventional "white" EPS, and the minimum density after 10 minutes at 100°C was 30.8 kg/m³.

## Claims

1. A process for the preparation of an expandable polymer composition in the form of beads, wherein the process comprises the steps of
a)making an aqueous suspension comprising at least seed material comprising a polymeric base material consisting of styrene or styrene derivates and one or more additive(s), polymerization initiator(s) suspension stabilizer(s) and water, wherein the one or more additive(s) is (are) homogenous distributed in the seed material
b)subjecting the seed material to a first seed polymerization with at least one or more kinds of monomer(s) and optionally with one or more kinds of polymerization initiator(s), wherein said first seed polymerization is effected at a temperature allowing polymerization in proceed at a first relatively slow polymerization rate, wherein polymerization is effected at a temperature or temperature range below a decomposition temperature of the polymerization initiator(s) at which polymerization takes place at an effective rate, but sufficient to induce first decomposition of polymerization initiator(s)
c)increasing the temperature to a polymerization temperature allowing a second seed polymerization to proceed at a second polymerization rate higher than the first polymerization rate
d)optionally performing a third or further seed polymerization.

2. The process according to claim 1, **characterized by** either one or a combination of the following procedural features (x) to (z):
x)the polymeric base material is a blend of two or more compatible polymers, wherein the term compatible means that the two or more polymers form a homogenous blend
and/or wherein said blend comprises one or more polymer(s) of a first type having a melt flow index of less than 10 g/10minutes (at a temperature of 200 degree Celsius and a mass of 5kg) and one or more polymer(s) of a second type having a melt flow index being 10 times higher, more preferably 20 times higher and in particular 30times higher than that of the polymer(s) of the first type
y)two or more different polymerization initiators are used , wherein the two or more different polymerization initiators have different activation temperatures.

3. The process according to claim 1 or 2, wherein the distribution of the additive(s) within the final polymer composition of the beads is controlled by adding monomer step-wise or gradually, and paying attention to limited monomer content during seed polymerizaion(s), wherein the polymerization is conducted such that the monomer content, relative to the amount of polymer, is continuously kept maximally at 40% by weight.

4. The process according to one of the claims 1 to 3, wherein the distribution of the additive(s) within the final polymer composition of the beads is controlled by use of de novo synthesized styrene polymers or copolymers, absent of blowing agent, in the seed material.

5. The process according to claim 1 to 4, wherein the distribution of the additive(s) within the final polymer composition of the beads is controlled by melt flow index of the polymer(s) used for the seed material, in particular observing the presence of a blend of two or more compatible polymers having different melt flow indices, respectively.

6. The process according to claim 1 to 5, wherein the distribution of the additive(s) within the final polymer composition of the beads is controlled by polymerization rate during seed polymerization, in particular of different first and second polymerization rates, relative to polymerization temperature and activation temperature(s) of optionally different polymerization initiators.

7. The process according to claim 1 to 6, wherein the distribution of the additive(s) within the final polymer composition of the beads is controlled by tye of additive used

8. The process according to any of claims 1 to 7, wherein the seed material comprises said additive(s) in up to 40% by weight, preferably 1% to 30% weight, more preferably 5% to 25% by weight and in particular 10% to 20% by weight based on the total weight of the seed material.

9. The process according to any of the claims 1 to 8, wherein said one or more additive(s) are selected from the group consisting of inorganic or organic additive(s) preferably selected from
- one or more athermanous materials,
- one or more flame retardant(s),
- one or more thermoplastic elastomer(s),
- one or more compatible polymer(s),
- one or more nucleating agent(s),
- one or more plasticizers,
- one or more pigment(s) or dye(s),
- one or more filler(s)

10. The process according to claim 9, wherein as
athermanous material is selected graphite, optionally combined with one or more flame retardant(s) as another type of additive.

11. The process according to any one of claims 1 to 10, wherein the used seed material has a maximum particle size in a range of 0,4 to 1,5mm and a coefficient of variation of less than 15% .

12. The process according to claim 11, wherein the maximum particle size of said seed is increased in the seed is increased in the seed polymerization at least by the factor 2 to 10.

13. The process according to claim 12, wherein the beads directly obtained from the seed polymerization are substantially monodisperse defined by a coeffizient of variation of less than 15%, and/or have a fineness defined by having a maximum particle size between 0,5 to 3mm,

14. The process according to one of the claims 1 to 13, wherein the seed material is obtained by extrusion, preferably combined with under-water pelletizing.

15. The process according to one of the claims 1 to 14, wherein the polymer in the seed material is constituted by de novo synthesized polymer, preferably non-expanded polymer selected from styrene polymers and copolymers.

## Patentansprüche

1. Verfahren zur Herstellung einer expandier baren Polymer zusammen setzung in Form von Beads, wobei das Verfahren die Schritte umfasst
a) Herstellen einer wässrigen Suspension, um fassend mindestens Keimmaterial, umfassend ein Polymer grundmaterial, bestehend aus Styrol oder Styrol-Derivaten, und ein oder mehrereAdditiv(e), Polymerisationsstarter, Suspensions stabilisator(en) und Wasser, wobei das eine oder die mehrerenAdditiv(e) in demKeimmaterial homogen verteilt ist (sind),
b) Unterziehendes Keimmaterials einer ersten Keimpolymerisation mit mindestenseiner oder mehrerenArten von Monomer(en) und gegebenenfalls mit einer oder mehrerenArten von Polymerisationsstarter(n), wobei die erste Keimpolymerisation bei einerTemperaturbewirkt wird, die die Polymerisation bei einer ersten relativ langsamen Polymerisations geschwindigkeit ablaufen lässt, wobei die Polymerisation bei einer Temperatur oder einem Temperaturbereich unter einer Zersetzungstemperatur des/der Polymerisationsstarter bewirkt wird, bei der die Polymerisation bei einer wirksamen Geschwindigkeit stattfindet, aber ausreichend, umeine erste Zersetzung von Polymerisationsstarter(n) einzuleiten,
c) Erhöhender Temperatur auf eine Polymerisationstemperatur, die einer zweiten Keimpolymerisation erlaubt, bei einer zweiten Polymerisations geschwindigkeit höher als die erste Polymerisations geschwindigkeit abzulaufen,
d) gegeben enfalls Durch führen einer dritten oder weiteren Keimpolymerisation.

2. Verfahren nach Anspruch 1, gekennzeichnet durchentweder eines oder eine Kombination der nach stehen den Verfahrens merkmale (x) bis (z):
x) das Polymer grundmaterial ist ein Gemisch von zwei oder mehreren verträglichen Polymeren, wobeider Begriff verträglich bedeutet, dass diezwei oder mehreren Polymere ein homogenes Gemisch bilden
und/oder wobei das Gemisch ein oder mehrere Polymer(e) von einem ersten Typ mit einem Schmelzindex von weniger als 10 g/10 Minuten(bei einerTemperatur von 200 Grad Celsius und einerMasse von 5 kg) und ein oder mehrere Polymer(e) von einem zweiten Typ mit einem Schmelzindex, der 10 Mal höher, bevorzugter20 Mal höher und insbesondere 30 Mal höherals jener des/der Polymer(s/e) von demerstenTyp ist, umfasst,
y) es werden zwei oder mehrere verschiedene Polymerisationsstarter verwendet, wobei die zwei oder mehreren verschiedenen Polymerisationsstarter verschiedene Aktivierungstemperaturen aufweisen.

3. Verfahren nach Anspruch 1 oder 2, wobei die Verteilungdes/derAdditiv(s/e)in der fertigen Polymerzusammensetzung der Beads durch Zugeben von Monomer schrittweise oder graduell gesteuert wird, und dem begrenzten Monomer gehaltwährend Keimpolymerisation(en) Beachtung geschenkt wird, wobei die Polymerisation so durch geführt wird, dass der Monomergehalt, relativ zu der Menge an Polymer, kontinuierlich maximal bei 40 Gew.-% gehalten wird.

4. Verfahren nach einem der Ansprüche 1 bis 3, wobei die Verteilung des/der Additiv(s/e) in der fertigen Polymer zusammensetzung der Beads durch Anwendung von de novo-synthetisierten Styrolpolymeren oder -copolymeren ohne Treibmittel in dem Keimmaterial gesteuert wird.

5. Verfahren nach Anspruch 1 bis 4, wobei die Verteilungdes/der Additiv(s/e)in der fertigen Polymer zusammensetzung der Beadsdurch den Schmelzindex des/der für das Keimmaterial verwendeten Polymer(s/e), insbesondere Beobachten des Vorliegens von einem Gemisch von zwei bzw. mehreren verträglichen Polymeren mit verschiedenen Schmelzindizes, gesteuert wird.

6. Verfahren nach Anspruch 1 bis 5, wobei die Verteilungdes/der Additiv(s/e) in der fertigen Polymerzusammensetzung der Beadsdurch die Polymerisationsgeschwindigkeitwährend Keimpolymerisation gesteuert wird, insbesondere von verschiedenenersten und zweiten Polymerisationsgeschwindigkeiten, relativ zur Polymerisationstemperatur und Aktivierungstemperatur(en) von gegebenenfallsverschiedenen Polymerisationsstartern.

7. Verfahren nach Anspruch 1 bis 6, wobei die Verteilungdes/der Additiv(s/e) in der fertigen Polymer zusammensetzung der Beadsdurch den Typ desverwendeten Additivs gesteuert wird.

8. Verfahren nach einem der Ansprüche 1 bis 7, wobei das Keimmaterial das/die Additiv(e) in bis zu 40 Gew.-%, vorzugsweise 1 Gew.-% bis 30 Gew.-%, bevorzugter5 Gew.-% bis 25 Gew.-% und insbesondere 10 Gew.-% bis 20 Gew.-%, basierend auf dem Gesamt gewicht des Keimmaterials, umfasst.

9. Verfahren nacheinem der Ansprüche 1 bis 8, wobeidaseine oder die mehreren Additiv(e) aus gewählt sind aus der Gruppebestehend aus anorganischen oder organischen Additiv(en), vorzugs weise ausgewählt aus
- einem oder mehreren wärmeundurchlässigen Materialien,
- einem oder mehreren Flammverzögerungs mittel(n),
- einem oder mehreren thermoplastischen Elastomer(en),
- einem oder mehrerenverträglichen Polymer(en),
- einem oder mehreren Keimbildungs mittel(n),
- einem oder mehreren Weichmachern,
- einem oder mehreren Pigment(en) oder Farbstoff(en),
- einem oder mehreren Füllstoff(en).

10. Verfahren nach Anspruch 9, wobei als wärmeundurchlässiges Material Graphit ausgewählt wird, gegeben enfalls kombiniert mit einem oder mehreren Flammverzögerungs mittel(n) als einemweiteren Additivtyp.

11. Verfahren nacheinemder Ansprüche 1 bis 10, wobei das verwendete Keimmaterial eine maximale Teilchengröße in einem Bereich von 0,4 bis 1,5 mm und einen Variations koeffizienten von weniger als 15 % aufweist.

12. Verfahren nach Anspruch 11, wobei die maximale Teilchengrößeder Bekeimung erhöht ist bei der Bekeimungin der Keimpolymerisation mindestensum den Faktor 2 bis 10 erhöht ist.

13. Verfahren nach Anspruch 12, wobei die Beads, die direkt von der Keimpolymerisation erhalten werden, im Wesentlichen monodispers durch einen Verteilungs koeffizienten von weniger als 15 % definiert sind, und/oder eine Feinheit aufweisen, definiert durch das Aufweisen einer maximalen Teilchen größe zwischen 0,5 bis 3 mm.

14. Verfahren nacheinem der Ansprüche 1 bis13, wobei das Keimmaterial durch Extrusion erhalten wird, vorzugsweise kombiniert mit Unter-Wasser-Pelletieren.

15. Verfahren nacheinem der Ansprüche 1 bis14, wobei das Polymer in dem Keimmaterial durch de novo-synthetisiertes Polymer aufgebaut ist, vorzugsweise nicht-expandiertes Polymer, ausgewählt aus Styrolpolymeren und -copolymeren.

## Revendications

1. Procédé pour la préparation d'une composition polymère expansible dans la forme de billes, dans lequel le procédé comprend les étapes consistant
a) à fabriquer une suspension aqueuse comprenant au moins un matériau de germe comprenant un matériau de base polymère consistant en styrène ou dérivés de styrène et un ou plusieurs additif(s), initiateur(s) de polymérisation, stabilisateur(s) de suspension et de l'eau, dans lequel les uns ou plusieurs additif(s) est (sont) distribué(s) de manière homogène dans le matériau de germe
b) à soumettre le matériau de germe à une première polymérisation de germe avec au moins un ou plusieurs types de monomère(s) et éventuellement avec un ou plusieurs types d'initiateur(s) de polymérisation, dans lequel ladite première polymérisation de germe est réalisée à une température permettant que la polymérisation se fasse à une première vitesse de polymérisation relativement lente, dans lequel la polymérisation est réalisée à une température ou dans un intervalle de température inférieur à une température de décomposition du(des) initiateur(s) de polymérisation à laquelle une polymérisation a lieu à une vitesse efficace, mais suffisante pour induire une première décomposition du(des) initiateur(s) de polymérisation
c) à augmenter la température jusqu'à une température de polymérisation permettant qu'une seconde polymérisation de germe se fasse à une seconde vitesse de polymérisation supérieure à la première vitesse de polymérisation
d) éventuellement à réaliser une troisième polymérisation de germe ou plus.

2. Procédé selon la revendication 1, **caractérisé par** soit l'un soit une combinaison des aspects de procédure (x) à (z) suivants :
x) le matériau de base polymère est une combinaison de deux ou plusieurs polymères compatibles, dans lequel le terme compatible indique que les deux ou plusieurs polymères forment une combinaison homogène et/ou dans lequel ladite combinaison comprend un ou plusieurs polymère(s) d'un premier type ayant un indice de fusion inférieur à 10 g/10 minutes (à une température de 200 degrés Celsius et une masse de 5 kg) et un ou plusieurs polymère(s) d'un second type ayant un indice de fusion étant 10 fois supérieur, encore mieux 20 fois supérieur et en particulier 30 fois supérieur à celui du(des) polymère(s) du premier type
y) deux ou plusieurs initiateurs de polymérisation différents sont utilisés, dans lequel les deux ou plusieurs initiateurs de polymérisation différents présentent des températures d'activation différentes.

3. Procédé selon la revendication 1 ou 2, dans lequel la distribution du(des) additif(s) dans la composition polymère finale des billes est contrôlée en ajoutant du monomère par étape ou progressivement, et en faisant attention à une teneur limitée en monomère pendant la(les) polymérisation(s) de germe, dans lequel la polymérisation est réalisée de sorte que la teneur en monomère, par rapport à la quantité de polymère, est maintenue en continue avec un maximum de 40 % en masse.

4. Procédé selon l'une quelconque des revendications 1 à 3, dans lequel la distribution du(des) additif(s) dans la composition polymère finale des billes est contrôlée par l'utilisation de polymères ou copolymères de styrène synthétisés de novo, en l'absence d'agent gonflant, dans le matériau de germe.

5. Procédé selon la revendication 1 à 4, dans lequel la distribution du(des) additif(s) dans la composition polymère finale des billes est contrôlée par l'indice de fusion du(des) polymère(s) utilisé(s) pour le matériau de germe, en observant en particulier la présence d'une combinaison de deux ou plusieurs polymères compatibles ayant des indices de fusion différents, respectivement.

6. Procédé selon la revendication 1 à 5, dans lequel la distribution du(des) additif(s) dans la composition polymère finale des billes est contrôlée par la vitesse de polymérisation pendant la polymérisation de germe, en particulier par des première et seconde vitesses de polymérisation différentes, par rapport à la température de polymérisation et la(les) température(s) d'activation de différents initiateurs de polymérisation éventuels.

7. Procédé selon la revendication 1 à 6, dans lequel la distribution du(des) additif(s) dans la composition polymère finale des billes est contrôlée par le type d'additif utilisé.

8. Procédé selon l'une quelconque des revendications 1 à 7, dans lequel le matériau de germe comprend ledit(lesdits) additif(s) jusqu'à 40 % en masse, de préférence de 1 % à 30 % en masse, encore mieux de 5 % à 25 % en masse et en particulier de 10 % à 20 % en masse rapporté à la masse totale du matériau de germe.

9. Procédé selon l'une quelconque des revendications 1 à 8, dans lequel lesdits un ou plusieurs additif(s) sont choisis dans le groupe consistant en un(des) additif(s) inorganique(s) ou organique(s) choisis de préférence parmi
- un ou plusieurs matériaux athermanes,
- un ou plusieurs retardateur(s) de flamme,
- un ou plusieurs élastomère(s) thermoplastique(s),
- un ou plusieurs polymère(s) compatible(s),
- un ou plusieurs agent(s) de nucléation,
- un ou plusieurs plastifiant(s),
- un ou plusieurs pigment(s) ou colorant(s),
- une ou plusieurs charge(s).

10. Procédé selon la revendication 9, dans lequel on choisit comme matière athermane du graphite, éventuellement combiné avec un ou plusieurs retardateur(s) de flamme comme autre type d'addifif.

11. Procédé selon l'une quelconque des revendications 1 à 10, dans lequel le matériau de germe utilisé présente une taille maximale de particule dans un intervalle de 0,4 à 1,5 mm et un coefficient de variation inférieur à 15 %.

12. Procédé selon la revendication 11, dans lequel la taille maximum de particule dudit germe est augmentée dans le germe dans la polymérisation de germe d'au moins le facteur 2 à 10.

13. Procédé selon la revendication 12, dans lequel les billes directement obtenues à partir de la polymérisation de germe sont pratiquement monodispersées définies par un coefficient de variation inférieur à 15 % et/ou présentent une finesse définie en ayant une taille de particule maximale de 0,5 à 3 mm.

14. Procédé selon l'une quelconque des revendications 1 à 13, dans lequel le matériau de germe est obtenu par extrusion, de préférence combinée avec une transformation en boulettes sous l'eau.

15. Procédé selon l'une quelconque des revendications 1 à 14, dans lequel le polymère dans le matériau de germe est constitué de polymère synthétisé de novo, de préférence de polymère non-expansé choisi parmi des polymères et copolymères de styrène.
